(19) **Europäisches Patentamt European Patent Office Office européen des brevets**

(11) **EP 3 835 161 B1**

(12) **EUROPEAN PATENT SPECIFICATION**

(45) Date of publication and mention of the grant of the patent:
**05.10.2022 Bulletin 2022/40**

(21) Application number: **20210863.5**

(22) Date of filing: **01.12.2020**

(51) International Patent Classification (IPC):
**B60W 40/13** (2012.01)

(52) Cooperative Patent Classification (CPC):
**B60W 40/13;** B60W 2520/26; B60W 2520/28

(54) **VEHICLE MASS ESTIMATION DEVICE**

GERÄT ZUR FAHRZEUGMASSENBESTIMMUNG

DISPOSITIF POUR L'ESTIMATION DE LA MASSE D'UN VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.12.2019 JP 2019222821**

(43) Date of publication of application:
**16.06.2021 Bulletin 2021/24**

(73) Proprietor: **Sumitomo Rubber Industries, Ltd. Kobe-shi, Hyogo 651-0072 (JP)**

(72) Inventors:
• **MATSUDA, Takuya Kobe-shi, Hyogo 651-0072 (JP)**
• **MAEDA, Yusuke Kobe-shi, Hyogo 651-0072 (JP)**
• **MURAKAMI, Keiichi Kobe-shi, Hyogo 651-0072 (JP)**

(74) Representative: **TBK Bavariaring 4-6 80336 München (DE)**

(56) References cited:
**JP-A- 2019 184 412     US-A1- 2005 065 695 US-B1- 6 314 383**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a mass estimation device that estimates the mass of a vehicle.

BACKGROUND ART

Various systems for assisting comfortable traveling are mounted in a vehicle. Examples thereof include a vehicle fuel consumption measurement system, a brake control system, and a tire deflation detection system (Tire Pressure Monitoring System; TPMS). These systems sometimes use the mass of a vehicle as a control parameter. However, the mass of a vehicle changes depending on the number of occupants and the amount of a load such as luggage. In order to allow the various systems to perform appropriate controls, it is desirable to accurately estimate the vehicle mass in which such changes are reflected.

Japanese Patent No. 5214738 discloses a vehicle mass estimation method based on the equation of motion related to a traveling vehicle.

Japanese Patent No. 5214738 and JP2019184412 are other examples of related art.

SUMMARY OF THE INVENTION

In such a mass estimation based on the equation of motion, the mass of a vehicle is estimated based on measurement data indicating the traveling situation of the vehicle, and parameters indicating the inclination of a road on which the vehicle is traveling and the state of the road. However, it is difficult to actually acquire parameters indicating the inclination of the road on which the vehicle is traveling and the state of the road, and the accuracy of the vehicle mass estimation performed based on data that can be practically acquired by the vehicle is not necessarily high.

It is an object of the present invention to provide a vehicle mass estimation device that can accurately estimate the mass of a vehicle.

A mass estimation device according to an aspect of the present invention includes a data acquisition unit and a mass estimation unit. The data acquisition unit is configured to sequentially acquire a data set of an acceleration and a driving force of the vehicle, based on measurement data sequentially acquired while the vehicle is traveling. The mass estimation unit is configured to: specify, from the sequentially acquired data set, a slope of a regression line representing a relation between the acceleration and the driving force; and estimate the mass of the vehicle based on the slope. The mass estimation unit is configured to: if an index dependent on the driving force does not vary beyond a first range from a first period through to a second period, and a variation from a first slope of the regression line that has been specified from a first data set acquired in the first period to a second slope of the regression line that has been specified from a second data set acquired in the second period exceeds a second range defined based on a variation of the index dependent on the driving force, reject the second slope, and otherwise estimate the mass of the vehicle based on the second slope.

According to the above-described aspect, the slope of a regression line representing a relation between the acceleration and the driving force is used for estimating the mass of the vehicle. If the index dependent on the driving force converges in the first range from the first period through to the second period, and the slope of the regression line representing the relation between the acceleration and the driving force has varied beyond the range defined based on the variation of the index dependent on the driving force, a newly calculated second slope is rejected, and is not used for mass estimation. Otherwise, the mass of the vehicle is estimated based on the second slope. Accordingly, from among newly specified slopes, the one with a high degree of reliability can be selected to estimate the mass of the vehicle, and thus the accuracy of the vehicle mass estimation is increased.

In the above-described mass estimation device, the mass estimation unit may be configured to estimate the mass of the vehicle based on the first slope, if the second slope is rejected.

According to this aspect, the mass of the vehicle is estimated based on the first slope determined to have a higher degree of reliability than the second slope, and thus the accuracy of the vehicle mass estimation is increased.

In the above-described mass estimation device, the data acquisition unit may be configured to: acquire, as the measurement data, engine information indicating a driving state of an engine of the vehicle; and acquire the driving force based on the engine information.

In the above-described mass estimation device, the engine information may include information regarding an engine torque and a rotational frequency of the engine.

In the above-described mass estimation device, the data acquisition unit may be configured to; acquire, as the measurement data, tire rotational speed information indicating a rotational speed of at least one tire attached to the vehicle; and acquire the driving force based on the engine information and the tire rotational speed information.

In the above-described mass estimation device, the data acquisition unit may be configured to: acquire, as the measurement data, tire rotational speed information indicating a rotational speed of at least one tire attached to the vehicle; and acquire the acceleration based on the tire rotational speed information.

In the above-described mass estimation device, the data acquisition unit may be configured to acquire, as the measurement data, tire rotational speed information indicating a rotational speed of at least one front wheel tire attached to the vehicle, and a rotational speed of at least one rear wheel tire attached to the vehicle. The index dependent on the driving force may be a slope of a regression line representing a relation between a slip ratio acquired from the tire rotational speed information, and the acceleration.

In the above-described mass estimation device, the data acquisition unit may be configured to acquire, as the measurement data, tire rotational speed information indicating a rotational speed of at least one front wheel tire attached to the vehicle, and a rotational speed of at least one rear wheel tire attached to the vehicle. The index dependent on the driving force may be a slope of a regression line representing a relation between a slip ratio acquired from the tire rotational speed information, and the driving force.

In the above-described mass estimation device, the data acquisition unit may be configured to acquire, as the measurement data, data indicating positional information of the vehicle. The index dependent on the driving force may be an acceleration calculated based on the data indicating the positional information.

In the above-described mass estimation device, the data acquisition unit may be configured to acquire, as the measurement data, data indicating positional information of the vehicle, and tire rotational speed information indicating a rotational speed of at least one front wheel tire attached to the vehicle and a rotational speed of at least one rear wheel tire attached to the vehicle. The index dependent on the driving force may be a slope of a regression line representing a relation between an acceleration acquired based on the data indicating the positional information, and a slip ratio acquired from the tire rotational speed information.

In the above-described mass estimation device, the data acquisition unit may be configured to acquire, as the measurement data, data indicating positional information of the vehicle. The index dependent on the driving force may be a slope of a regression line representing a relation between an acceleration acquired based on the data indicating the positional information, and the driving force.

A mass estimation method according to an aspect of the present invention is a method for estimating a mass of a vehicle, and includes the following steps:

(1) sequentially acquiring a data set of an acceleration and a driving force of the vehicle, based on measurement data sequentially acquired while the vehicle is traveling;
(2) specifying, from the sequentially acquired data set, a slope of a regression line representing a relation between the acceleration and the driving force; and
(3) estimating the mass of the vehicle based on the slope.

Note that step (3) of estimating the mass is a step of: if an index dependent on the driving force does not vary beyond a first range from a first period through to a second period, and a variation from a first slope of the regression line that has been specified from a first data set acquired in the first period to a second slope of the regression line that has been specified from a second data set acquired in the second period exceeds a second range defined based on a variation of the index dependent on the driving force, rejecting the second slope; and otherwise estimating the mass of the vehicle based on the second slope.

A mass estimation program according to an aspect of the present invention is a program for estimating a mass of a vehicle, and causes a computer to execute the following steps:

(1) sequentially acquiring a data set of an acceleration and a driving force of the vehicle, based on measurement data sequentially acquired while the vehicle is traveling;
(2) specifying, from the sequentially acquired data set, a slope of a regression line representing a relation between the acceleration and the driving force; and
(3) estimating the mass of the vehicle based on the slope.

Note that step (3) of estimating the mass is a step of: if an index dependent on the driving force does not vary beyond a first range from a first period through to a second period, and a variation from a first slope of the regression line that has been specified from a first data set acquired in the first period to a second slope of the regression line that has been specified from a second data set acquired in the second period exceeds a second range defined based on a variation of the index dependent on the driving force, rejecting the second slope; and otherwise estimating the mass of the vehicle based on the second slope.

With the mass estimation device according to the present invention, it is possible to accurately estimate the mass of a vehicle.

BRIEF DESCRIPTION OF THE DRAWINGS

FIG. 1 is a schematic diagram showing a state in which a mass estimation device according to an embodiment of the present invention is mounted in a vehicle.

FIG. 2 is a block diagram showing an electrical configuration of the mass estimation device according to the embodiment.

FIG. 3 is a diagram illustrating a principle of mass estimation processing.

FIG. 4 is another diagram illustrating the principle of the mass estimation processing.

FIG. 5 is a graph showing an experimental result of mass estimation.

FIG. 6 is a graph showing an experimental result.

FIG. 7 is a graph showing a relation between a slip ratio and a driving force.

FIG. 8 is a graph of accelerations and slip ratios that have been acquired by an experiment.

FIG. 9 is a flowchart showing a flow of the mass estimation processing.

FIG. 10 is a graph showing a relation between a wheel load and a dynamic loaded radius for the internal pressure of each tire.

FIG. 11 is a block diagram showing an electrical configuration when the mass estimation device includes a tire deflation detection function.

FIG. 12 is a flowchart showing a flow of deflation detection processing.

EMBODIMENTS OF THE INVENTION

Hereinafter, a mass estimation device, a mass estimation method, and a mass estimation program according to an embodiment of the present invention will be described with reference to the drawings. In the following embodiments, the mass of a vehicle is estimated based on the equation of motion related to the traveling vehicle. Here, the mass of a vehicle includes, in addition to the body mass of the vehicle itself, the masses of an occupant and a load such as luggage. The details of the flow of mass estimation processing will be described later. Note that, in the following embodiments, the same or corresponding constituent elements are denoted by the same reference numerals, and the descriptions thereof may be omitted where appropriate.

[1. First Embodiment]

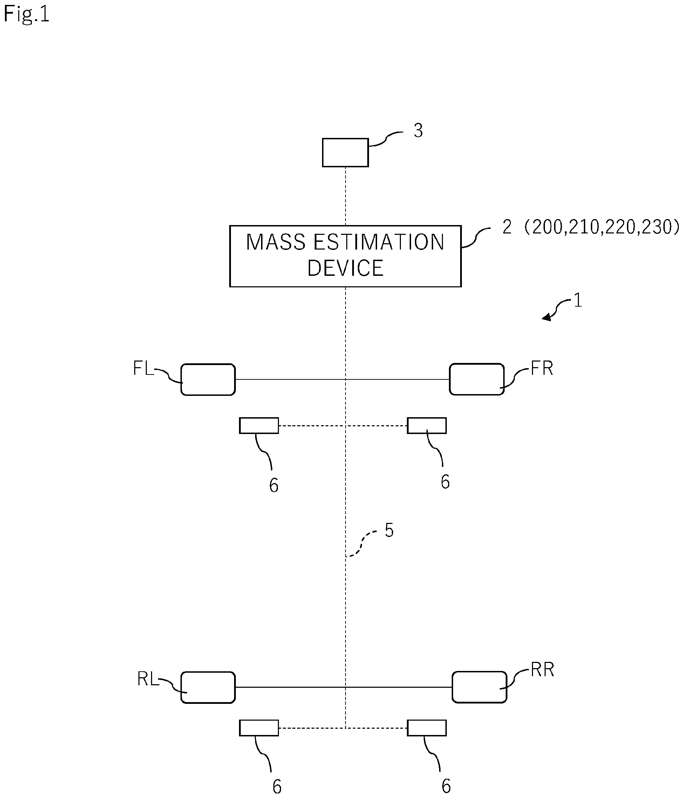

In the following, the configuration of a mass estimation device 2 according to the first embodiment will be described. FIG. 1 is a schematic diagram showing a state in which the mass estimation device 2 according to the first embodiment is mounted in a vehicle 1. The vehicle 1 is a four-wheeled vehicle, and includes a left front wheel FL, a right front wheel FR, a left rear wheel RL, and a right rear wheel RR. A tire is attached to each of the wheels FL, FR, RL, and RR. Either the two front wheels (FL and FR) or the two rear wheels (RL and RR) of the vehicle 1 are driving wheels, and the other are driven wheels. The mass estimation device 2 has the function of estimating a mass M of the vehicle 1 that changes according to the live load such as an occupant and luggage.

Each of the wheels FL, FR, RL, and RR is equipped with a wheel speed sensor 6, and each wheel speed sensor 6 detects the wheel speed information of a wheel to which the wheel speed sensor 6 is attached (i.e., the rotational speed information of the tire attached to the wheel) at a predetermined sampling cycle $\Delta T$. The wheel speed sensors 6 are connected to the mass estimation device 2 via a communication line 5, and the tire rotational speed information detected by each of the wheel speed sensors 6 is transmitted in real-time to the mass estimation device 2.

Any sensor that can detect the wheel speed of the traveling wheels FL, FR, RL, and RR can be used as the wheel speed sensor 6. For example, it is possible to use a sensor of a type that measures the wheel speed from an output signal of an electromagnetic pickup, or to use a sensor of a type that generates power using rotation, like a dynamo, and measures the wheel speed from the voltage generated at this time. Also, the attachment position of each wheel speed sensor 6 is not particularly limited, and can be selected as appropriate according to the type of the sensor, as long as the wheel speed can be detected.

The vehicle 1 may further include an indicator 3. The indicator 3 can be realized in any form, including, for example, a liquid crystal display element and a liquid crystal monitor. Although the attachment position of the indicator 3 can be selected as appropriate, the indicator 3 is preferably provided at a position easily viewable from the driver, including, for example, on an instrument panel. When the mass estimation device 2 is connected to a car navigation system, it is also possible to use a car navigation monitor as the indicator 3.

<1. Configuration of Mass Estimation Device>

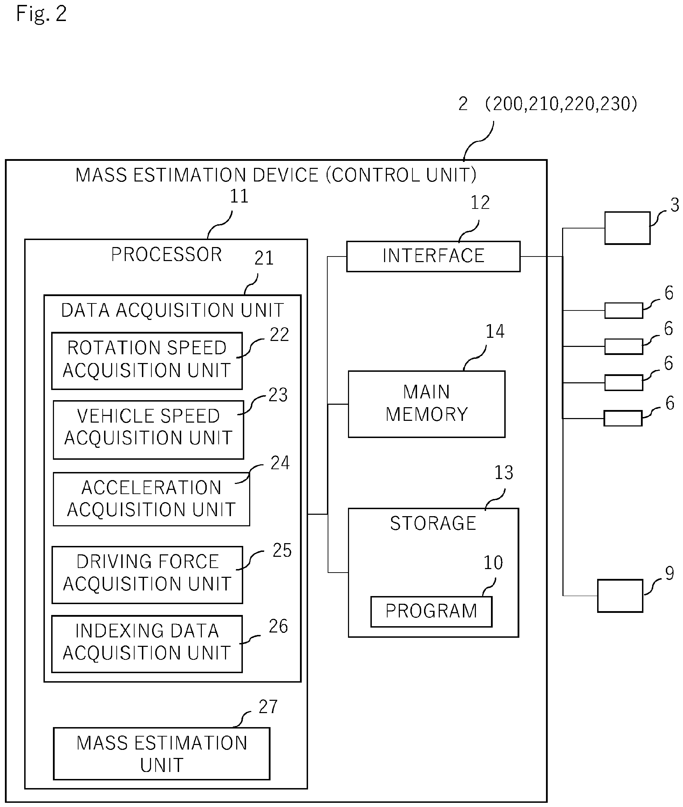

FIG. 2 is a block diagram showing an electrical configuration of the mass estimation device 2 according to the present embodiment. As shown in FIG. 2, the mass estimation device 2 as hardware is a control unit mounted in the vehicle 1, and includes a processor 11, an interface 12, a storage 13, and a main memory 14. The interface 12 is a communication device for performing communication with external devices such as the wheel speed sensors 6 and the indicator 3, and another control unit 9. Examples of the other control unit 9 include an engine electronic control unit (ECU) that controls the operations of the engine. A program 10 for controlling the operations of various parts of the vehicle 1 is stored in the storage 13. The program 10 is written into the storage 13 from a storage medium such as a CD-ROM, or a dedicated writer, for example. Examples of the storage 13 include a hard disk drive (HDD) and a solid state drive (SSD).

The processor 11 reads out the program 10 from the storage 13, loads the program 10 into the main memory 14, and executes processing in accordance with the program 10. The processor 11 virtually operates as a data acquisition unit 21 and a mass estimation unit 27 by execution of the program 10. The data acquisition unit 21 includes a rotation speed acquisition unit 22, a vehicle speed acquisition unit 23, an acceleration acquisition unit 24, a driving force acquisition unit 25, and an indexing data acquisition unit 26. The details of the operations of the units 21 to 27 will be described later.

<2-1. Principle of Mass Estimation>

In the following, the principle for estimating the mass M [kg] of the vehicle 1 will be described. The equation of motion relating to the vehicle 1 can be expressed based on Equation (1) below:

$$M\alpha = Fe - Fa - Fr - Fg \qquad (1)$$

Here, $\alpha$ [m/s$^2$] is the acceleration of the vehicle 1. Fe [N] is the driving force (hereinafter referred to as an "engine driving force") that is output from the engine of the vehicle 1. Fa [N] is the air resistance relating to the vehicle 1. Fr [N] is the rolling resistance. Fg [N] is the gravity exerted on the vehicle 1 by the inclination of a road.

Rearranging Equation (1) gives:

$$F = M\alpha + f \qquad (1')$$

where F = Fe - Fa, and f = Fr + Fg. Hereinafter, F refers to the driving force, and f refers to the travel resistance.

Equation (1') represents a linear equation between the acceleration $\alpha$ and the driving force F, with a slope of M and an intercept of f. Accordingly, if a slope M1 of a regression line L representing the relation between the acceleration $\alpha$ and the driving force F is specified using a data set of $\alpha$ and F, the mass M of the vehicle 1 can be estimated based on the slope M1. When f1 is the intercept of L, the equation for L can be given as follows:

$$L:F = M1\alpha + f1$$

Here, the acceleration $\alpha$ and a vehicle speed V [m/s] of the vehicle 1 can be calculated based on, for example, tire rotational speed information indicating the rotational speed of at least one tire of the vehicle 1.

The engine driving force Fe and the air resistance Fa is calculated based on, for example, engine information that is output from the engine ECU, in accordance with Equations (2) and (3) below, respectively.

$$Fe = \eta \cdot (n/V) \cdot 2\pi t \quad (2)$$

$$Fa = kV^2 \qquad (3)$$

Here, n is the engine rotational frequency [rps], and t is the engine torque [Nm]. In addition, $\eta$ and k are constants that are unique to the vehicle 1. The constants $\eta$ and k are specified in advance, for example, by an experiment or simulation, and are stored in the storage 13 of the mass estimation device 2.

The rolling resistance Fr is a resistance generated when the vehicle 1 is traveling, and mainly indicates the energy loss resulting from the deformation of the tire of the vehicle 1 and the energy loss resulting from the friction between the tire and the road on which the vehicle 1 is traveling. Fr is calculated using a rolling resistance coefficient μ, an inclination angle θ of the road, and a gravity acceleration g in accordance with Equation (4) below. Note that the μ is a coefficient that is dependent on the state of the road affecting the ease with which the tire rolls, examples thereof including whether the road on which the vehicle 1 is traveling is an asphalt road, a gravel road, or a snow-covered road, and whether the road is wet or dry.

$$Fr = \mu Mg\cos\theta \quad (4)$$

The gravity Fg in the inclination direction of the road is calculated in accordance with Equation (5) below. The sign of the gravity Fg in the inclination direction is positive when the vehicle 1 ascends on the road, and is negative when the vehicle 1 descends on the road.

$$Fg = Mg\sin\theta \quad (5)$$

Here, although also dependent on the state of the road, the rolling resistance coefficient μ is generally a coefficient that is significantly smaller than 1. Therefore, it is often the case that the travel resistance f is predominantly affected by the gravity Fg in the inclination direction, rather than by the rolling resistance Fr.

As can be seen from Equation (1'), it is necessary to consider the travel resistance f in order to estimate the mass M of the vehicle 1. However, as Equations (4) and (5) indicate, f changes under the influence of the state of the road on which the vehicle is traveling and road conditions such as the inclination angle θ. However, it is often necessary to provide the vehicle 1 with a special installation in order to acquire the data on the inclination angle θ. Additionally, it is necessary to use an appropriate rolling resistance coefficient μ for each state of the road, and the state of the road also changes depending on the weather. As such, there are various constraints on the acquisition of the condition of the road on which the vehicle 1 is traveling, and it is difficult to accurately estimate the mass of the vehicle 1 while considering the travel resistance f.

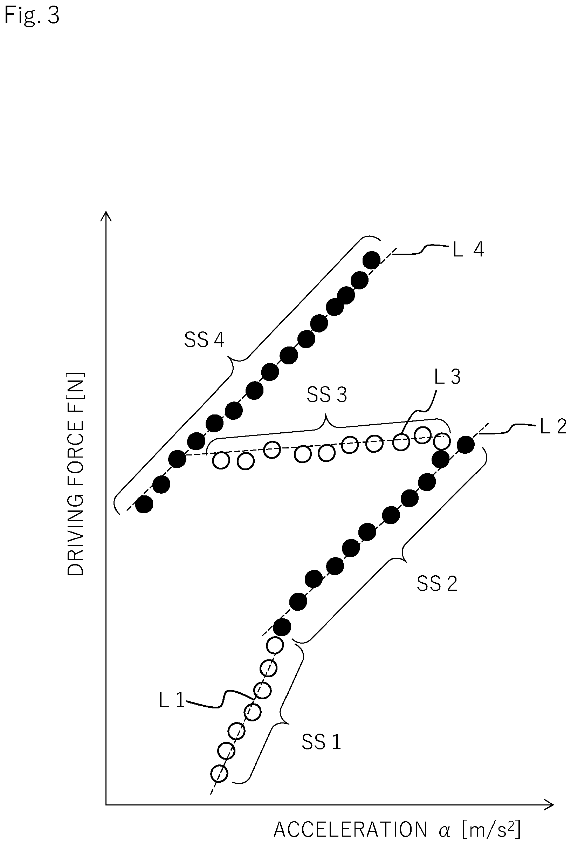

Here, reference is made to FIG. 3. FIG. 3 is a graph obtained as a result of Experiment 1 conducted by the present inventors, and the horizontal axis represents the acceleration α, and the vertical axis represents the driving force F. The α and F acquired when the vehicle 1 having a mass M has traveled are plotted on the graph. Note, however, that the data on α and F acquired during gear changing or braking has been excluded, and therefore the data plotted on the graph can be divided into groups of subsets SS1 to SS4 (see FIG. 3) each corresponding to a single acceleration of the vehicle 1. The data items on (α, F) included in the subsets SS1 to SS4 include data items acquired under various road conditions, and are considered to significantly vary in the travel resistance f. For this reason, it is considered that if a regression line is specified by using all the data items included in the subsets SS1 to SS4 at once, the correlation coefficient of the regression is reduced, resulting in a reduced accuracy of the mass estimation.

The present inventors contemplated selecting, from among the data sets included in the subsets SS1 to SS4, a data set acquired when there is less variation in the road condition, or in other words, a data set acquired when the travel resistance f can be regarded as constant. That is, it is considered that, by selecting only a data set of α acquired when the road condition is substantially constant and only the driving force F substantially affects the acceleration (α, F), the accuracy of the mass of the vehicle 1 that is estimated based on the slope M1 of the regression line L of the selected data set can be improved.

Meanwhile, the value that the mass M of the vehicle 1 can practically take has a certain range. The present inventors have noted that this range can be used to select a data set acquired when the road condition is substantially constant. Specifically, it can be said that the mass M will not be less than a mass m1 of the vehicle 1 when empty, and will exceed a mass m2 of the vehicle 1 when fully loaded. Empty is a state in which only a live load by a driver having a standard body weight is applied to the mass of the vehicle 1 itself (i.e., a state in which no live load other than the driver is applied) or a state in which no live load, including the driver, is applied. Fully loaded is a state in which a maximum live load that can be tolerated by the vehicle 1 is applied to the vehicle 1.

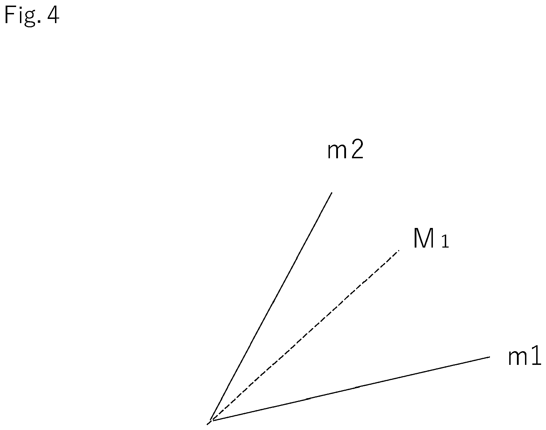

The above-described range of the mass M also corresponds to the range of the slope M1 of the regression line L of the acceleration α and the driving force F. Therefore, the mass m1 and the mass m2 are set as the lower limit and the upper limit, respectively, of the slope M1, and the range determined by m1 and m2 is used as the slope condition of the slope M1 (see FIG. 4). Also, a regression line L is specified for each data set of (α, F) included in each subset, and the data set of (α, F) is used for the mass estimation processing only if the slope M1 of the specified L satisfies the slope condition $m1 \le M1 \le m2$. On the other hand, if the slope M1 does not satisfy the slope condition, the data set of (α, F) is rejected, and is not used for the mass estimation processing.

Referring again to FIG. 3, the slope of the regression line L2 of the acceleration α and the driving force F belonging to the subset SS2 among the subsets SS1 to SS4 satisfied the slope condition set as described above. The slope of the regression line L4 of the acceleration $\alpha$ and the driving force F belonging to the subset SS4 also satisfied the same slope condition. Accordingly, each of the data sets of ($\alpha$, F) belonging to the subset SS2 and the subset SS4 can be used for the mass estimation processing of the vehicle 1 as the data sets acquired when the road condition is substantially constant.

On the other hand, the slopes of the regression line L1 of $\alpha$ and F belonging to the subset SS1 and the regression line L3 of $\alpha$ and F belonging to the subset SS3 did not satisfy the above-described slope condition. That is, the data sets ($\alpha$, F) of the subset SS1 and the subset SS3 are both considered to have been acquired under a road condition that cannot be said to be substantially constant. Accordingly, by not using the data sets of ($\alpha$, F) belonging to the subset SS1 and the subset SS3 for the mass estimation processing of the vehicle 1, it is possible to suppress the influence of the variation in the road condition, thus increasing the accuracy of the mass estimation.

A value calculated based on the slope M1 satisfying the slope condition is used as an estimate value Ms of the mass of the vehicle 1. The estimate value Ms can be the most recent slope M1, for example. For example, Ms can be updated each time one slope M1 satisfying the slope condition is obtained by sequential computation using a Kalman filter or the like. However, in this method, if a newly obtained slope M1 has varied beyond a certain range from the previous value, the reliability of the new slope M1 is not verified. Accordingly, a slope M1 with a low level of reliability may be used for the mass estimation processing.

<2-2. Principle of Mass Estimation>

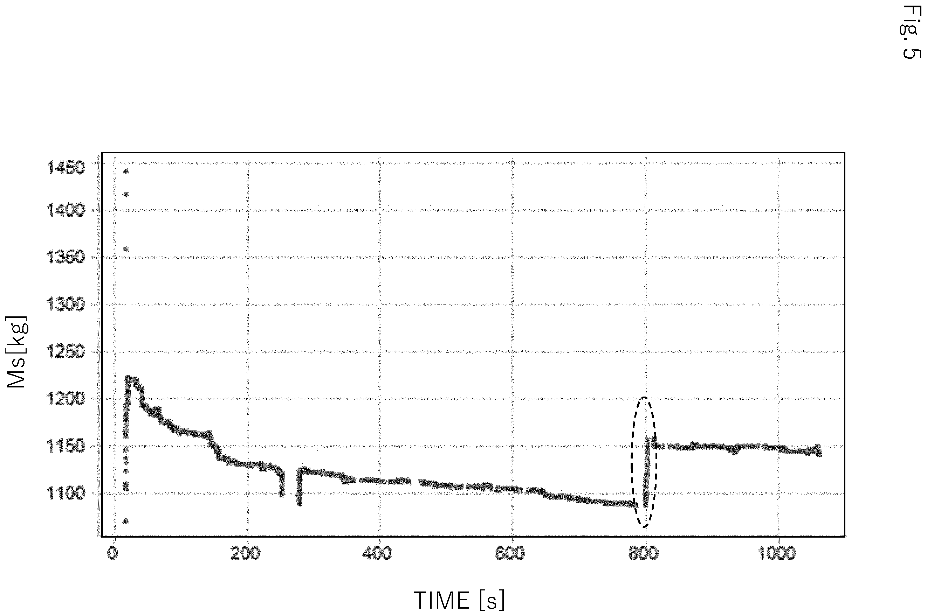

FIG. 5 is a graph showing a result of Experiment 2 in which the present inventors have performed mass estimation processing based on the above-described principle, using an actual vehicle. The horizontal axis of the graph represents the time [s] elapsed since the above-described mass estimation processing has started in the vehicle, and the vertical axis represents the calculated estimate value Ms [kg]. During the experiment, the actual mass M of the vehicle 1 did not vary and was constant. As shown in FIG. 5, the estimate value Ms appeared to converge within a certain range with an elapse of time, but suddenly increased in the vicinity of 800 s (indicated by the broken line in the drawing).

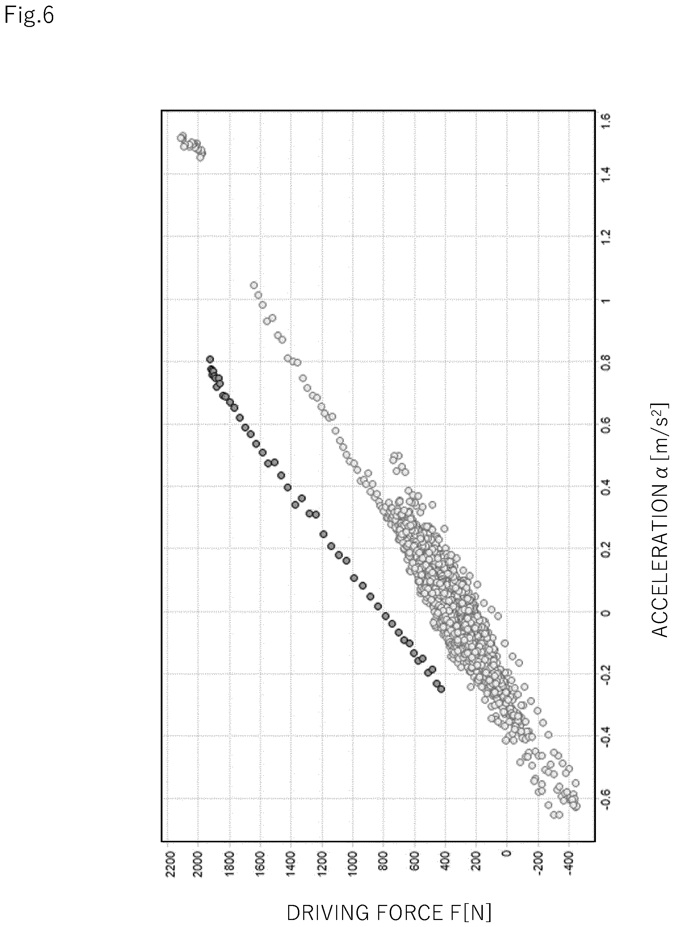

FIG. 6 is a graph of the acceleration $\alpha$ and the driving force F obtained by Experiment 2. The horizontal axis of the graph represents $\alpha$ [m/s$^2$], and the vertical axis represents F [N]. All of the slopes M1 of the regression lines that have been specified for each subset of ($\alpha$, F) shown in FIG. 6 satisfied the above-described slope condition. Nevertheless, the result of Experiment 2 has confirmed that a variation of the estimate value Ms or the slope M1 occurred for some reason, and the variation did not converge within a certain range. In such a case, with the above-described mass estimation processing, it is difficult to determine which of the estimate value before variation and the estimate value after variation has a smaller error.

When the slope M1 has varied beyond a certain range, if it is possible to determine whether or not the variation is appropriate, then one of the slope M1 before variation and the slope M1 after variation that has a higher degree of reliability can be used for the mass estimation. Therefore, the present inventors contemplated separately setting an index P dependent on the driving force F, and evaluating the rate of change of the index P to the slope M1. By doing so, even if the slope M1 has varied beyond a certain range, it is possible to determine whether or not the slope M1 after variation is to be used for the mass estimation processing. That is, when the index P may be said to have converged in a certain range in a given period, if it can be said that the slope M1 in the same period has suddenly varied with respect to the variation of the index P, then it is considered that the variation of the slope M1 is caused by some noise or the like and is not appropriate. Accordingly, the accuracy of the mass estimation can be maintained by not using the newly obtained slope M1 for the mass estimation processing. On the other hand, if the index P has varied beyond a certain range, and the slope M1 has also varied according to the amount of variation of the index P, the accuracy of the mass estimation can be further increased by using the newly obtained slope M1 for the mass estimation processing as a value having a certain degree of reliability.

Specifically, if it is determined that the index P does not vary beyond a first range from a first period through to the subsequent second period, and that the variation from a first slope N1 of a regression line that has been specified from a group of chronologically successive data sets of ($\alpha$, F) (hereinafter referred to as "first data sets") acquired in the first period, to a second slope N2 of a regression line that has been specified from a group of data sets (hereinafter referred to as "second data sets") of ($\alpha$, F) acquired in the second period exceeds a second range defined based on the variation of the index P, then the second slope N2 is rejected, and is not used for the mass estimation processing.

As the index P, any parameter that changes depending on the driving force F can be selected as appropriate. In the first embodiment, the index P is a slope O of a regression line representing a relation group of between the acceleration $\alpha$ and the slip ratio $\lambda$ [%] relating to the vehicle 1. The slip ratio $\lambda$ is calculated, for example, in accordance with Equation (6) below:

$$\lambda = (vk\text{-}vj)/vj \times 100 \qquad (6)$$

Here, vk is the representative wheel speed of the driving wheels, and vj is the representative wheel speed of the driven wheels. The wheel speeds vk and vj can be calculated from tire rotational speed information that can be acquired, for example, from the wheel speed sensors 6, and that indicates the rotational speed of at least one front wheel tire and the rotational speed of at least one rear wheel tire. The slip ratio $\lambda$ represents how much the driving wheel tire has slipped for the travel of the vehicle 1. As in the present embodiment, the representative wheel speed of the driven wheel can be used in place of the speed of the vehicle 1.

Here, a curve indicating the relation between a slip ratio and a driving force (or a driving force coefficient or the like) of a vehicle for each road is generally known.

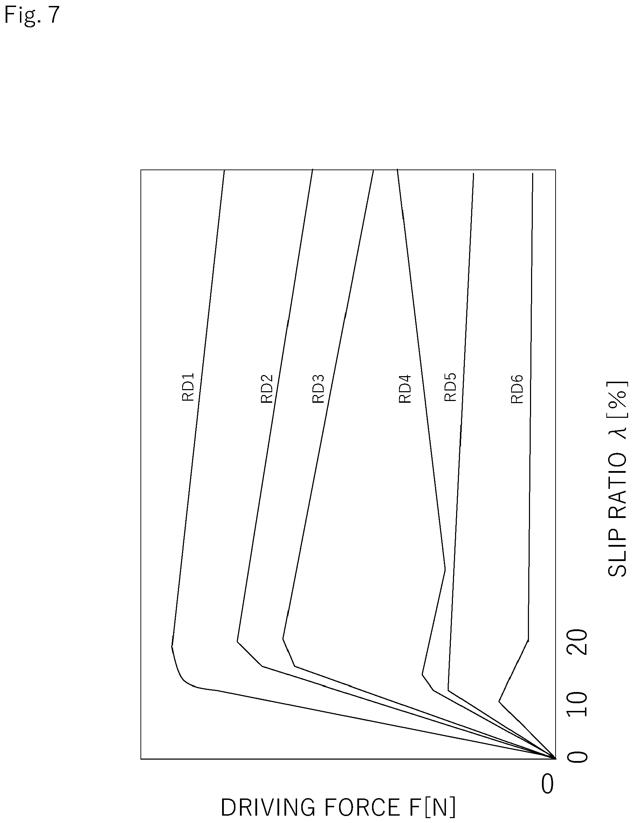

FIG. 7 is an example thereof, and shows the relation between the slip ratio $\lambda$ and the driving force F for roads RD1 to RD6 that are different from each other. As shown in FIG. 7, in the range in which the slip ratio $\lambda$ is about 10% or less, the driving force F increases as the slip ratio $\lambda$ increases. According to the present inventors, in the range in which the slip ratio $\lambda$ is about 10% or less, the slip ratio $\lambda$ and the driving force F may be said to have an approximate proportional relation. That is, for the range in which the slip ratio $\lambda$ is about 10% or less, it can be said that a proportional relation holds between the acceleration and the slip ratio $\lambda$ of the vehicle 1. Due to the above, the slope O of a regression line specified from the measured acceleration $\alpha$ and the slip ratio $\lambda$ can be used as the index P corresponding to the slope M1 of the regression line L specified from the acceleration $\alpha$ and the driving force F.

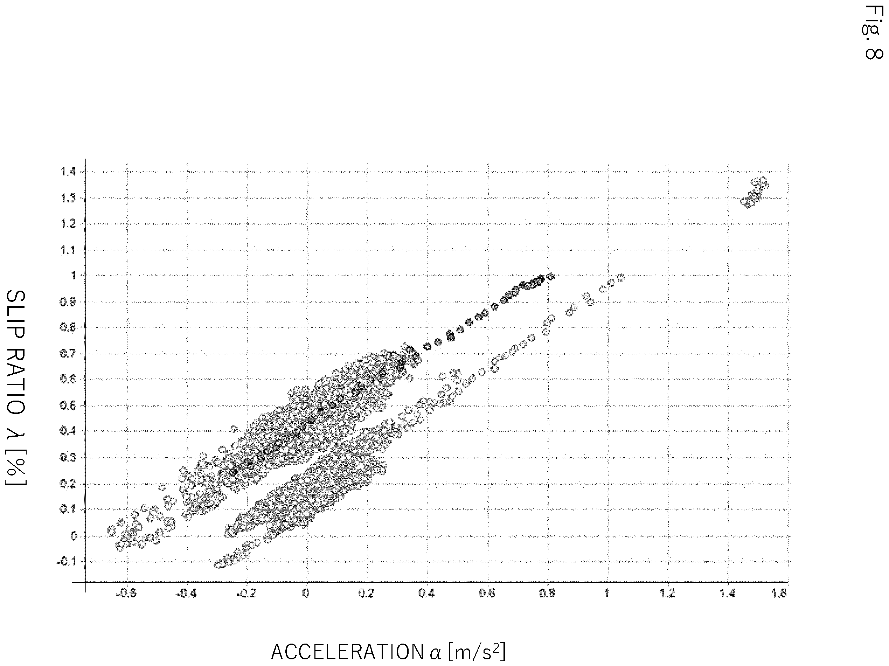

Here, reference is made to FIG. 8. FIG. 8 is a graph on which the data sets of $(\alpha, \lambda)$ obtained by Experiment 2 described above are plotted, and the horizontal axis represents the acceleration $\alpha$ [m/s$^2$], and the vertical axis represents the slip ratio $\lambda$ [%]. The plotted data sets of the acceleration $\alpha$ and slip ratio $\lambda$ correspond to the data sets of the acceleration $\alpha$ and the driving force F shown in FIG. 6. That is, the accelerations $\alpha$ in FIG. 8 are the same as the accelerations $\alpha$ shown in FIG. 6, and each of the slip ratios $\lambda$ is calculated from the tire rotational speed information acquired at the time corresponding to each acceleration $\alpha$, based on Equation (6).

For the accelerations $\alpha$ and the slip ratios $\lambda$ shown in FIG. 8, a regression line was specified for each subset for which the road condition was substantially constant, as in the case of the acceleration $\alpha$ and the driving force F. As a result, the slopes O of the regression lines converged within a certain range. That is, even if the slope M1 of the regression line L of $(\alpha, F)$ has varied by a certain degree or more, the slope O of the regression line of $(\alpha, \lambda)$ may not vary as compared with the slope M1. By using this, it is possible to determine whether or not the slope M1 has a degree of reliability sufficient for it to be used for the mass estimation processing.

The variation of the slope M1 can be expressed, for example, by a rate of change $\Delta$M1. The rate of change $\Delta$M1 is calculated using the first slope N1 specified from the first data sets and the second slope N2 specified from the second data sets, in accordance with Equation (7) below:

$$\Delta M1 = (N2\text{-}N1)/N1 \qquad (7)$$

As the variation $\Delta$P of the index P from the first period through to the second period, it is possible to use a rate of change $\Delta$O of a slope O2 of a regression line specified from the data sets of $(\alpha, \lambda)$ acquired in the second period, relative to the slope O1 of the regression line specified from the data sets of $(\alpha, \lambda)$ acquired in the first period. The rate of change $\Delta$O is calculated, for example, in accordance with Equation (8) below:

$$\Delta O = (O2\text{-}O1)/O1 \qquad (8)$$

The first range can be defined, for example, as a range whose lower limit and upper limit are set as -Th1 and Th1, respectively, by a positive first constant Th1. The first constant Th1 is a pre-set constant, and is saved in advance, for example, in the storage 13.

When the magnitude of the variation of the slope O does not exceed the first range, i.e., where $|\Delta O| \leq$ Th1, if the rate of change $\Delta$M exceeds the second range defined based on the rate of change $\Delta$O, a newly calculated second slope N2 is rejected, and the previously calculated first slope N1 is used for the mass estimation processing. When the variation of the slope O exceeds the first range, i.e., where $|\Delta O| >$ Th1, a newly calculated second slope N2 is not rejected and is used for mass estimation processing, regardless of whether or not the rate of change $\Delta$M exceeds the second range.

In the present embodiment, the relative magnitude (hereinafter referred to as "relative amount of change") of the rate of change $\Delta$M1 with respect to the rate of change $\Delta$O is collated with a range whose upper limit and lower limit are set by a second constant Th2, whereby the variation of the slope M1 is evaluated. The second constant Th2 is a pre-set positive constant, and is saved in advance, for example, in the storage 13. The relative amount of change is defined, for example, by ($\Delta$M1-$\Delta$O). Where $|\Delta$O$| \leq$ Th1, if the magnitude of the relative amount of change ($\Delta$M1-$\Delta$O) exceeds the second constant Th2, i.e., where $|\Delta$M1-$\Delta$O$| >$ Th2, the rate of change $\Delta$M can be said to exceed the second range defined based on the rate of change $\Delta$O, and therefore the second slope N2 is rejected.

<3. Mass Estimation Processing>

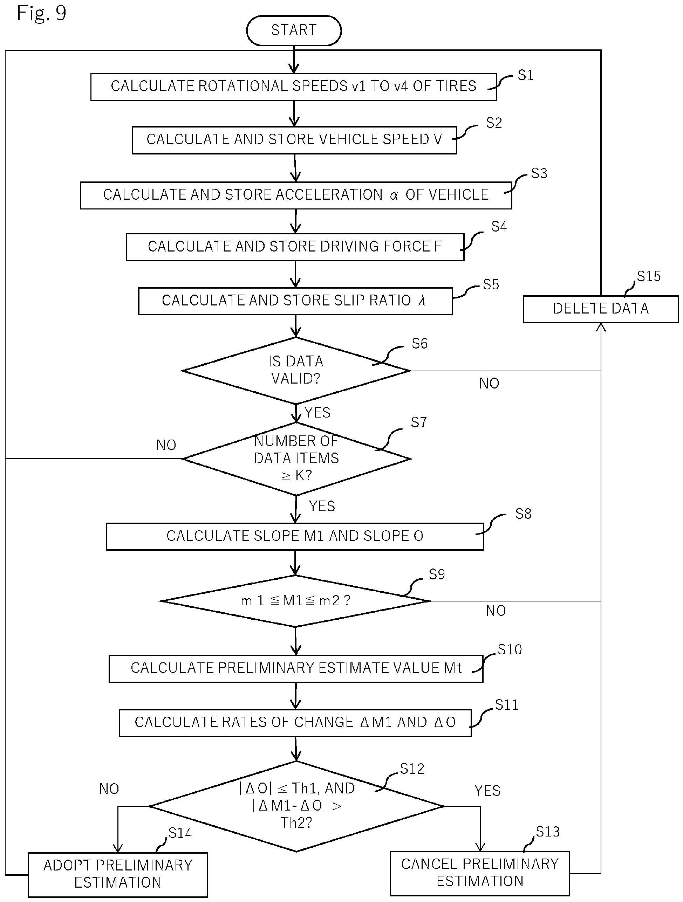

In the following, mass estimation processing, which is based on the above-described knowledge, for estimating the mass of the vehicle 1 will be described with reference to FIG. 9. For example, the mass estimation processing shown in FIG. 9 starts when the switch of the engine is turned on, and ends when a certain period of time has elapsed after stopping the vehicle 1.

In steps S1 to S4, data items necessary for later analysis are acquired by the data acquisition unit 21. First, in step S1, the rotation speed acquisition unit 22 acquires tire rotational speed information that is consecutively transmitted from each of the wheel speed sensors 6, and calculates, based on the tire rotational speed information, rotational speeds v1 to v4 [s$^{-1}$] of the tires. Note that the rotational speeds v1 to v4 are the rotational speeds of the tires attached to the wheels FL, FR, RL, and RR, respectively. The calculated rotational speeds v1 to v4 are stored in the storage 13 or the main memory 14.

In the subsequent step S2, the vehicle speed acquisition unit 23 calculates a vehicle speed V, based on a tire rotational speed (vj in the present embodiment) acquired in step S1. The calculated vehicle speed V is stored in the storage 13 or the main memory 14.

In the subsequent step S3, the acceleration acquisition unit 24 calculates an acceleration $\alpha$ of the vehicle 1. In the present embodiment, the acceleration $\alpha$ is calculated from the tire rotational speed information of the driven wheels. The calculated acceleration $\alpha$ is stored in the storage 13 or the main memory 14.

In the subsequent step S4, the driving force acquisition unit 25 calculates a driving force F of the vehicle 1, based on Equations (2) and (3). The calculated driving force F is combined with the acceleration $\alpha$ acquired in the immediately preceding step S3, and is stored as a set of ($\alpha$, F) in the storage 13 or the main memory 14.

In the subsequent step S5, the indexing data acquisition unit 26 calculates a slip ratio $\lambda$ in accordance with Equation (6) described above. Note that in the present embodiment, vk is an average rotational speed of the driving wheel tires, and vj is an average rotational speed of the driven wheel tires. The calculated $\lambda$ is combined with the acceleration $\alpha$ acquired in step S3, and is stored in the storage 13 or the main memory 14. That is, when steps S4 and S5 end, a set of ($\alpha$, F, $\lambda$) has been stored in the storage 13 or the main memory 14.

In the subsequent step S6, the data acquisition unit 21 determines whether or not the data on the most recent acceleration $\alpha$ and the driving force F obtained in steps S1 to S5 is valid. The data being valid means that the data on ($\alpha$, F) has an accuracy high enough for it to be used for the mass estimation processing. That is, data that has been acquired during gear changing or braking has significant variation in ($\alpha$, F) and adversely affects the accuracy of mass estimation, and it is therefore determined that a data set that has been obtained in such a situation is not valid. Note that, in the present embodiment, the determination as to whether or not gear changing or a brake operation has been performed is made based on information on an engine rotational frequency n contained in the engine information, and a brake pressure acquired from a brake control ECU or the like.

If the data acquisition unit 21 determines that the most recent data set of ($\alpha$, F) is valid, the processing proceeds to step S7. On the other hand, if the data acquisition unit 21 determines that the data set of ($\alpha$, F) is not valid, the processing proceeds to step S15, and the most recent data set of ($\alpha$, F, $\lambda$) is deleted from the storage 13 or the main memory 14. Thereafter, the processing returns to step S1, and the data acquisition unit 21 acquires subsequent data items on ($\alpha$, F, $\lambda$).

In step S7, the data acquisition unit 21 determines whether the number of data items on ($\alpha$, F, $\lambda$) accumulated in the storage 13 or the main memory 14 is greater than or equal to a predetermined number K (K is an integer of 2 or more). If the data acquisition unit 21 determines that the number of data items is greater than or equal to K, the processing proceeds to step S8. On the other hand, if the data acquisition unit 21 determines that the number of data items is less than K, the processing returns to step S1, and acquires subsequent data items on ($\alpha$, F, $\lambda$). That is, if the number of data items greater than or equal to K on ($\alpha$, F, $\lambda$) are acquired, step S8 is performed for a data set including such data items.

In the subsequent step S8, the mass estimation unit 27 specifies, based on the data sets accumulated in the storage 13 or the main memory 14, a regression line L of the acceleration $\alpha$ and the driving force F, and a regression line of the acceleration $\alpha$ and the slip ratio $\lambda$. That is, in step S8, the mass estimation unit 27 calculates a slope M1 (second slope N2) and a slope O2 as the index P corresponding to the slope M1. The method for calculating the second slope N2 and the slope O2 is not particularly limited, and it is possible to use the least squares method, for example. It is also possible to use the iterative least squares method in order to improve the computing efficiency. In this case, each time valid data is newly acquired in step S6, the slope M1 is calculated while being updated.

In the subsequent step S9, the mass estimation unit 27 determines, based on the slope condition (m1$\leq$M1$\leq$m2) stored in advance in the storage 13 or the main memory 14, whether or not the second slope N2 calculated in step S8 satisfies the slope condition. If the mass estimation unit 27 determines that the second slope N2 does not satisfy the slope condition, the mass estimation unit 27 rejects that second slope N2, and deletes, from the storage 13 or the main memory 14, the data set of the acceleration $\alpha$, the driving force F, and the slip ratio $\lambda$ serving as original data from which the second slope N2 has been calculated (step S15). Thereafter, the processing returns to step S1. On the other hand, if the mass estimation unit 27 determines that the second slope N2 satisfies the slope condition, the processing proceeds to step S10. Step S9 is a step of selecting a slope M1 that is to be used for estimating the mass M in the subsequent step S10. In other words, step S9 is a step of selecting a data set of the acceleration $\alpha$ and the driving force F for which the road condition is substantially constant.

In step S10, the mass estimation unit 27 calculates a preliminary estimate value Mt of the mass of the vehicle estimated based on the second slope N2, and temporarily saves the calculated preliminary estimate value Mt in the main memory 14. At this time, the slope M1 (second slope N2) is selected according to the slope condition. However, it is unknown how much that slope M1 has varied relative to the previously calculated slope (first slope N1). Therefore, in step S10, the mass is preliminarily estimated based on the second slope N2. However, depending on the result of the determination made in step S12, which will be described later, the second slope N2 and the preliminary estimate value Mt may be deleted from the storage 13 or the main memory 14, and the preliminary estimation may be cancelled (step S13).

Although the slope M1 may be simply used as the preliminary estimate value Mt in the preliminary mass estimation based on the slope M1, the present invention is not limited thereto. In the present embodiment, the preliminary estimate value Mt is calculated by sequential computation using a Kalman filter in order to increase the accuracy of the estimation. In the sequential computation, the slope M1 of the most recent regression line, the intercept, and four components of a covariance matrix ($2\times2$ matrix) representing the variance of the estimate value are saved in the storage 13 or the main memory 14. Note that the initial value for the sequential computation is set in advance, and is stored in the storage 13. In this manner, when the preliminary estimate value Mt is calculated by the sequential computation, the mass M can be accurately preliminarily estimated based on a large amount of the past data. On the other hand, only values of the six most recent variables are to be stored. Accordingly, a smaller memory capacity is required, and, moreover, the computational load is also reduced.

In step S11, the mass estimation unit 27 calculates a rate of change $\Delta M1$, a rate of change $\Delta O$, and a relative amount of change ($\Delta M1-\Delta O$). $\Delta M1$ and $\Delta O$ are calculated in accordance with Equations (7) and (8) described above. Note that the index O2 in Equation (8) chronologically corresponds to the most recent slope M1 (second slope N2).

In step S12, the mass estimation unit 27 determines if the rate of change $\Delta O$ is within the first range (i.e., $|\Delta O|\leq Th1$), and if the magnitude of the relative amount of change ($\Delta M1-\Delta O$) exceeds the second constant ($|\Delta M1-\Delta O|>Th2$). Note that the first constant Th1 and the second constant Th2 are defined in advance, for example, by an experiment or simulation, and are saved in advance in the storage 13.

If the mass estimation unit 27 determines that $|\Delta O| \leq Th1$, and $|\Delta M1-\Delta O| > Th2$, the processing continues to step S13. In step S13, the slope O2, the second slope N2, and the preliminary estimate value Mt calculated based on the second slope N2, which were temporarily saved in step S10, are deleted from the storage 13 or the main memory 14, and the preliminary estimation is cancelled. In the subsequent step S15, the data set used for calculating the second slope N2 is deleted from the storage 13 or the main memory 14. That is, the second slope N2 is rejected. Note that when the preliminary estimation is cancelled in step S13, the most recent estimate value Ms is the estimate value Ms calculated based on the previously saved M1 (first slope N1). Thereafter, the processing returns to step S1, and the same procedure is repeated.

On the other hand, if the mass estimation unit 27 determines that $|\Delta O|> Th1$ in step S12, the processing continues to step S14. In step S14, the preliminary estimate value Mt temporarily saved in the main memory 14 in step S10 is used as the estimate value Ms. That is, the slope M1 (first slope N1) previously saved in the storage 13 or the main memory 14 and the estimate value Ms calculated based on that first slope N1 overwrite the most recent M1 (second slope N2) and the estimate value Ms calculated based on that second slope N2, and are saved. Thereafter, the processing returns to step S1, and the same procedure is repeated.

[2. Second Embodiment]

In the following, a mass estimation device 200 according to the second embodiment will be described. Although the slope O of a regression line representing a relation between the acceleration $\alpha$ and the slip ratio $\lambda$ is used as the index P dependent on the driving force F in the above embodiment, the slope of a regression line representing a relation between the slip ratio $\lambda$ and the driving force F is used as the index P in the present embodiment.

As described above, as long as the vehicle is traveling normally, a substantial proportional relation holds between the slip ratio $\lambda$ and the driving force F. Therefore, whether or not the second slope N2 can be use for the mass estimation processing can be determined by verifying the variation of the slope of the regression line of ($\lambda$, F) relative to the variation of the slope M1 of the regression line L of ($\alpha$, F). Note that the electrical configuration of the mass estimation device 200 is the same as that of the mass estimation device 2 according to the first embodiment shown in FIG. 2. The flow of the mass estimation processing is also substantially the same as the flow of processing according to the first embodiment shown in FIG. 9, but is different in that the index PI calculated in step S8 is the slope of a regression line of ($\lambda$, F). Note that the first constant Th1 and the second constant Th2 need not be the same as those of the above embodiment, and may be set as appropriate.

[3. Third Embodiment]

In the following, a mass estimation device 210 according to the third embodiment will be described. Although the slope O of a regression line representing a relation between the acceleration $\alpha$ and the slip ratio $\lambda$ is used as the index P dependent on the driving force F in the first embodiment, an acceleration $\beta$ acquired based on data indicating positional information of the vehicle 1 is used as the index P in the present embodiment. As can be seen from the equation of motion, the acceleration $\beta$ is an index dependent on the driving force F.

The electrical configuration of the mass estimation device 210 is the same as that of the mass estimation device 2 according to the first embodiment shown in FIG. 2. However, in the present embodiment, the indexing data acquisition unit 26 acquires data indicating the positional information of the vehicle 1, in place of the slip ratio $\lambda$. More specifically, in step S5 in the flowchart shown in FIG. 9, the indexing data acquisition unit 26 periodically acquires a positioning signal of a Global Navigation Satellite System (GNSS), for example. The mass estimation device 210 can calculate the acceleration $\beta$ of the vehicle 1 based on the acquired positioning signal. The acceleration $\beta$ may be calculated by the indexing data acquisition unit 26 in step S5, or may be calculated by the mass estimation unit 27 in step S8.

It is considered that the value of the acceleration $\beta$ is supposed to substantially match the value of the acceleration $\alpha$ acquired at the same time, or to have a certain offset relative to the value of the acceleration $\alpha$ acquired at the same time. Based on this, when the acceleration $\beta$ has not varied beyond the first range from the first period through to the second period, if the slope M1 of the regression line L has varied beyond the second range, it can be considered that an offset has occurred for some reason in the value of at least one of the driving force F and the acceleration $\alpha$. Accordingly, the mass estimation unit 27 rejects the second slope N2 in such a case. Note that the first constant Th1 and the second constant Th2 need not be the same as those of the above embodiment, and may be set as appropriate.

The acceleration $\beta$ may be used in step S10 at a stage before the calculation of the preliminary estimate value Mt, in order to determine whether or not the data set that has been used up until that time is to be used for mass estimation processing. For example, the mass estimation unit 27 may calculate an offset amount R representing the extent to which the acceleration $\beta$ is offset relative to the acceleration $\alpha$, and compare the offset amount with a predetermined threshold. The offset amount R can be defined by any equation as long as the amount of offset of the acceleration $\beta$ relative to the acceleration $\alpha$ can be evaluated. For example, the offset amount R is defined as follows.

$$R = \beta/\alpha$$

Alternatively, the offset amount R also can be defined as follows.

$$R = \alpha/\beta$$

Alternatively, the offset amount R also can be defined as follows.

$$R = |\beta - \alpha|$$

Here, an offset amount R1 for the first period and an offset amount R2 for the second period can be set as appropriate. For example, the offset amount R1 can be an average value or a maximum value of the offset amounts R acquired from the ($\alpha$,$\beta$) acquired in the first period. Similarly, the offset amount R2 can be an average value or a maximum value of the offset amounts R acquired from ($\alpha$,$\beta$) acquired in the second period. In such a case where the mass estimation unit 27 determines that the offset amount R exceeds a certain range, it is considered that some abnormality exists in the value of at least one of the acceleration $\alpha$, and therefore the processing may proceed to step S15 upon such determination.

[4. Fourth Embodiment]

In the following, a mass estimation device 220 according to the fourth embodiment will be described. Although the slope O of a regression line representing a relation between the acceleration $\alpha$ and the slip ratio $\lambda$ is used as the index P dependent on the driving force F in the first embodiment, the slope of a regression line representing a relation between the acceleration $\beta$ and the driving force F is used as the index P in the present embodiment. The acceleration $\beta$ is the same as the acceleration $\beta$ described in the third embodiment.

The electrical configuration of the mass estimation device 220 is the same as that of the mass estimation device 2 according to the first embodiment shown in FIG. 2. The flow of the mass estimation processing is also substantially the same as the flow of the processing according to the first embodiment shown in FIG. 9. However, in the present embodiment, the indexing data acquisition unit 26 calculates the acceleration $\beta$ in step S5 of the flowchart shown in FIG. 9. In addition, the mass estimation unit 27 calculates the slope of a regression line of $(\beta, F)$ as the index P in step S8. Note that the first constant Th1 and the second constant Th2 need not be the same as those of the above embodiment, and can be set as appropriate.

[5. Fifth Embodiment]

In the following, a mass estimation device 230 according to the fifth embodiment will be described. Although the slope O of a regression line representing a relation between the acceleration $\alpha$ and the slip ratio $\lambda$ is used as the index P dependent on the driving force F in the first embodiment, the slope of a regression line representing a relation between the acceleration $\beta$ and the slip ratio $\lambda$ is used as the index P in the present embodiment. The slip ratio $\lambda$ is the same as the slip ratio $\lambda$ described in the first embodiment, and the acceleration $\beta$ is the same as the acceleration $\beta$ described in the third embodiment.

The electrical configuration of the mass estimation device 230 is the same as that of the mass estimation device 2 according to the first embodiment shown in FIG. 2. The flow of the mass estimation processing is also substantially the same as the flow of processing according to the first embodiment shown in in FIG. 9. However, in the present embodiment, the indexing data acquisition unit 26 calculates the acceleration $\beta$ and the slip ratio $\lambda$ in step S5 of the flowchart shown in FIG. 9. Also, the mass estimation unit 27 calculates the slope of a regression line of $(\beta, \lambda)$ as the index P in step S8. Note that the first constant Th1 and the second constant Th2 need not be the same as those of the above embodiment, and may be set as appropriate.

With the mass estimation device according to each of the embodiments described above, even if the road condition is unknown, it is possible to accurately estimate the mass of the vehicle 1 based on the information from the wheel speed sensors 6 and the engine control device that are mounted in the vehicle 1. In contrast to methods for estimating the mass based on the change in the frequency spectrum of the wheel speed, it is also possible to accurately estimate the mass when the S/N ratio of the wheel speed sensors 6 is low. Furthermore, the index P is introduced to verify the reliability of data that is to be used for mass estimation. Accordingly, even if an estimate value of the mass has varied, whether or not that estimate value is to be used can be determined, and it is thus possible to further increase the accuracy of the mass estimation.

<4. Application Examples>

The estimate value Ms calculated by the mass estimation device according to each of the above embodiments can be used, for example, for a tire pressure monitoring system using a dynamic loaded radius (DLR) method. Deflation detection processing using the DLR method uses a phenomenon in which a deflated tire has a reduced dynamic loaded radius (DLR) as a result of collapsing during traveling, and rotates faster. Also, three index values DEL1 to DEL3 for comparing the rotational speeds v1 to v4 of predetermined tires are used as the deflation index values for evaluating the deflation. The index values DEL1 to DEL3 are calculated, for example, in accordance with the following equations.

$$DEL1 = \{(v1+v4)/(v2+v3)-1\} \times 100 \ (\%)$$

$$DEL2 = \{(v1+v2)/(v3+v4)-1\} \times 100 \ (\%)$$

$$DEL3 = \{(v1+v3)/(v2+v4)-1\} \times 100 \ (\%)$$

Among the above-described index values, DEL1 is an index value for comparing the rotational speeds v1 to v4 of diagonally located tires, DEL2 is an index value for comparing the rotational speeds v1 to v4 of front and rear tires, and DEL3 is an index value for comparing the rotational speeds v1 to v4 of left and right tires. DEL1 increases with an increase in the rotational speeds v1 and v4 and decreases with an increase in the rotational speeds v2 and v3, or increases with an increase in the rotational speeds v2 and v3 and decreases with an increase in the rotational speeds v1 and v4. DEL2 increases with an increase in the rotational speeds v1 and v2 and decreases with an increase in the rotational speeds v3 and v4, or increases with an increase in the rotational speeds v3 and v4 and decreases with an increase in the rotational speeds v1 and v2. DEL3 increases with an increase in the rotational speeds v1 and v3 and decreases with an increase in the rotational speeds v2 and v4, or increases with an increase in the rotational speeds v2 and v4 and decreases with an increase in the rotational speeds v1 and v3.

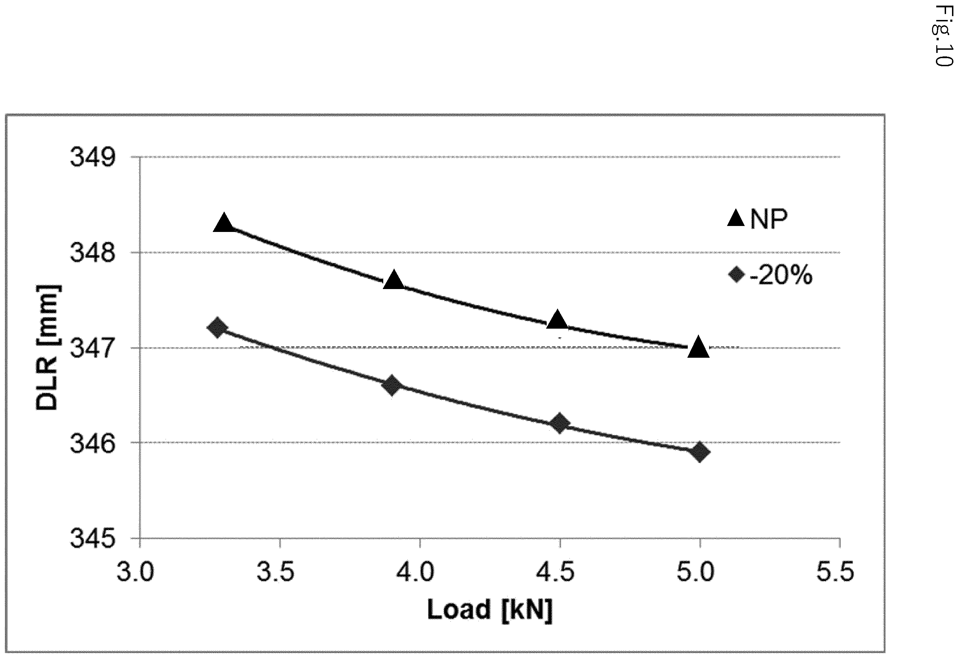

Meanwhile, the dynamic loaded radius of a tire is reduced by deflation, and is also reduced by the application of a live load. FIG. 10 is a graph on which the dynamic loaded radius (DLR [mm]) of a tire with respect to the live load (Load [kN]) of the vehicle 1 is plotted for two cases: a normal internal pressure state (NP state) in which the tire is not deflated; and a 20% deflated state. As can be seen from the graph, in both of the case where the tire has a normal internal pressure and the live load is about 5 (kN), and the case where the tire is deflated by 20% and the live load is about 3.5 (kN), the dynamic loaded radius of the tire is about 347 (mm). Therefore, it is not possible to distinguish between the case where the tire has collapsed simply by the application of a live load and the case where the tire has collapsed by deflation. As a result, although the tire actually has a normal internal pressure, the deflation index value DEL exceeds the threshold, thus making it more likely to cause a false alarm of the system. Alternatively, a situation may occur in which DEL does not exceed the threshold although the tire actually has an abnormal internal pressure.

Among the above-described three index values, DEL2 for comparing the rotational speeds of the front and rear tires is particularly susceptible to the influence of the load change of the vehicle 1. The reason is that a live load is mainly applied by the masses of an occupant and luggage carried in the trunk, and therefore the influence of the increase or decrease of the live load is mainly exerted on the dynamic loaded radius of the rear wheel tires when the vehicle 1 is a front-engine, front-drive vehicle. Accordingly, the accuracy of deflation detection can be increased by performing correction so as to cancel the influence of the load change of the vehicle 1 on DEL2. The estimate value Ms calculated by the above-described processing can be used for this correction processing.

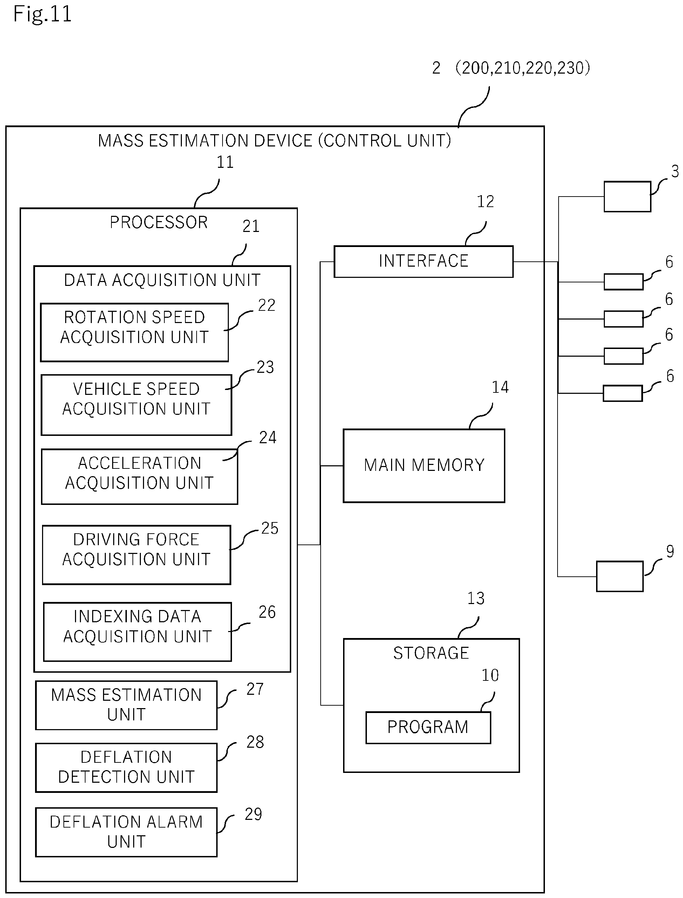

FIG. 11 is a diagram showing the electrical configuration of the mass estimation device 2 (200, 210, 220, 230) to which a deflation detection function has been added. In this example, the processor 11 further operates as a deflation detection unit 28 and a deflation alarm unit 29 by execution of the program 10. The deflation detection unit 28 calculates index values DEL1 to DEL3, compares the index values DEL1 to DEL3 with predetermined thresholds, and determines whether or not the index values DEL1 to DEL3 satisfy the deflation conditions of the respective tires. If it is determined that any of the tires are deflated, the deflation alarm unit 29 generates an alarm to inform the user of the occurrence of deflation.

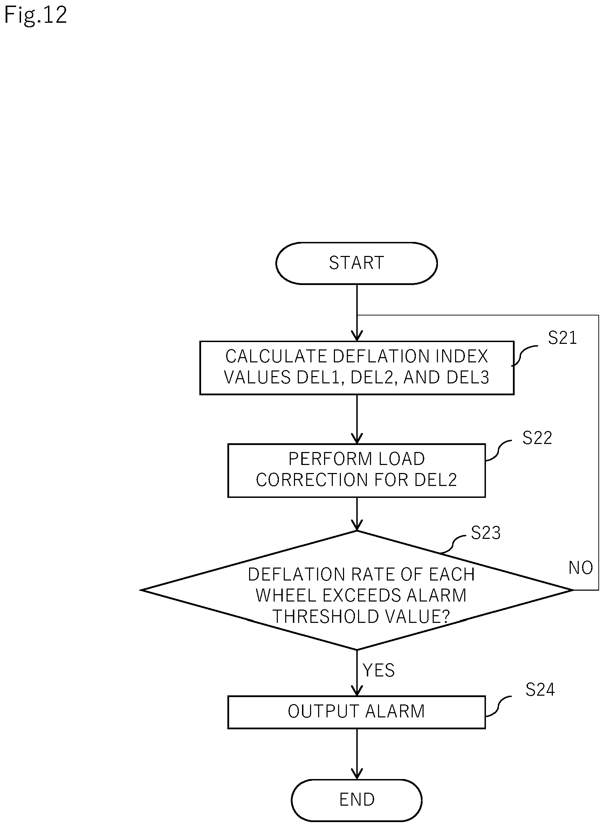

In the following, deflation detection processing for detecting the deflation of the tires attached to FL, FR, RL, and RR will be described with reference to FIG. 12. The following processing is performed in parallel with the above-described mass estimation processing. In step S21, the deflation detection unit 28 calculates index values DEL1 to DEL3 based on the rotational speeds v1 to v4 of the tires acquired by the rotation speed acquisition unit 22, in accordance with the above-described equations.

In step S22, the deflation detection unit 28 acquires data on the most recent estimate value Ms stored in the storage 13 or the main memory 14, and performs load correction for DEL2. As the method for performing load correction for DEL2, it is possible to use, for example, the method described in JP 2012-202836A. Specifically, the correction can be performed in accordance with the following equation. In the following equation, DEL2' is the corrected DEL2, C1 is the correction coefficient, DifL is the difference between the mass of the vehicle 1 as obtained from learning at the standard internal pressure and the estimate value Ms at the present (during traveling). C1 can be determined in advance for each vehicle by performing test traveling at the standard internal pressure under a plurality of loading conditions.

$$DEL2' = DEL2 - C1 \times DifL$$

In step S23, the deflation detection unit 28 compares thresholds that are stored in advance in the storage 13 with the calculated DEL1, DEL2', and DEL3, and determines whether or not any of the tires are deflated. As a result, if no tire is determined to be deflated, the processing returns to S21. If any of the tires are determined to be deflated, the processing proceeds to step S24.

In step S24, the deflation alarm unit 29 outputs an alarm via the indicator 3. At this time, the indicator 3 may output an alarm so as to identify which tire is deflated, or outputs an alarm so as to only indicate that one of the tires is deflated. Alternatively, the deflation alarm may be executed in the form of an audio output.

<5. Modifications>

Although embodiments of the present invention have been described above, the present invention is not limited to the above embodiments, and various modifications may be made without departing from the gist of the invention. For example, the following modifications can be made. In addition, the subject matters of the following modifications may be combined as appropriate.

<5-1>

The method for acquiring the data on the acceleration $\alpha$ and the driving force F of the vehicle 1 is not limited to the methods described in the above embodiments. For example, in each of the embodiments, the acceleration $\alpha$ may be acquired by an acceleration sensor provided in the vehicle 1. The driving force F may be acquired based on an output value of a wheel torque sensor provided in the vehicle 1. The method for acquiring the vehicle speed V and the tire rotational speed information is also not limited to the methods described in the above embodiments. The vehicle speed V and the tire rotational speed information may be calculated, for example, from a positioning signal of a Global Navigation Satellite System.

<5-2>

Although the mass estimation device receives a positioning signal of a GNSS in the third to fifth embodiments, a device configured separately from the mass estimation device, or another control unit 9 of the vehicle 1 may directly receive a positioning signal of a GNSS from the GNSS system.

<5-3>

In the mass estimation processing according to each of the above embodiments, the estimate value Ms of the mass M of the vehicle is repeatedly calculated, and is updated using a Kalman filter. However, the estimate value Ms used in step S14 may be updated just once from the previous value for each time of traveling.

<5-4>

The order in which steps S3, S4, and S5 are performed in the mass estimation processing shown in FIG. 9 is not limited to the above-described order. For example, it is also possible to simultaneously perform steps S3, S4, and S5 in parallel. When the acceleration $\alpha$ is calculated independently from the vehicle speed V, the timing at which step S3 is performed can be changed as appropriate. Furthermore, step S5 may be performed after the data has been determined to be valid in step S6.

<5-5>

The vehicle mass estimation devices according to the above embodiments are not limited to any particular driving method of four-wheeled vehicles, and can be applied to any of a FF vehicle, a FR vehicle, a MR vehicle, and a 4WD vehicle.

The mass estimation unit is configured to: if an index dependent on the driving force does not vary beyond a first range from a first period through to a second period, and a variation from a first slope of the regression line that has been specified from a first data set acquired in the first period to a second slope of the regression line that has been specified from a second data set acquired in the second period exceeds a second range defined based on a variation of the index dependent on the driving force, reject the second slope, and otherwise estimate the mass of the vehicle based on the second slope.

LIST OF REFERENCE NUMERALS

| | | | |
|---|---|---|---|
| 1 | Vehicle | 2 | Mass estimation device |
| 3 | Indicator | 6 | Wheel speed sensor |
| 9 | Another control unit | | |
| 21 | Data acquisition unit | 22 | Rotation speed acquisition unit |
| 23 | Vehicle speed acquisition unit | | |
| 24 | Acceleration acquisition unit | | |
| 25 | Driving force acquisition unit | | |
| 26 | Indexing data acquisition unit | 27 | Mass estimation unit |
| 28 | Deflation detection unit | 29 | Deflation alarm unit |
| FL | Left front wheel | FR | Right front wheel |
| RL | Left rear wheel | RR | Right rear wheel |
| v1 to v4 | Wheel speed | V | Vehicle speed |
| $\alpha$ | Acceleration | M | Mass of vehicle 1 |
| F | Driving force | Fe | Engine driving force |
| Fa | Air resistance | n | Engine rotational frequency |
| t | Engine torque | DEL2 | Deflation index value |
| O | Slope of regression line | | |

(continued)

| P | Index |
|---|---|
| Th1 | First constant |
| Th2 | Second constant |

**Claims**

1. A mass estimation device (2,200, 210, 220, 230) that estimates a mass of a vehicle (1), comprising:

a data acquisition unit (21) configured to sequentially acquire a data set of an acceleration and a driving force of the vehicle (1), based on measurement data sequentially acquired while the vehicle (1) is traveling; and
a mass estimation unit (27) configured to: specify, from the sequentially acquired data set, a slope of a regression line representing a relation between the acceleration and the driving force; and estimate the mass of the vehicle (1) based on the slope,
**characterized in that** the mass estimation unit (27) is configured to: if an index dependent on the driving force does not vary beyond a first range from a first period through to a second period, and a variation from a first slope of the regression line that has been specified from a first data set acquired in the first period to a second slope of the regression line that has been specified from a second data set acquired in the second period exceeds a second range defined based on a variation of the index dependent on the driving force, reject the second slope; and otherwise estimate the mass of the vehicle (1) based on the second slope.

2. The mass estimation device (2,200, 210, 220, 230) according to claim 1,
wherein the mass estimation unit (27) is configured to estimate the mass of the vehicle (1) based on the first slope, if the second slope is rejected.

3. The mass estimation device (2,200, 210, 220, 230) according to claim 1 or 2,
wherein the data acquisition unit (21) is configured to: acquire, as the measurement data, engine information indicating a driving state of an engine of the vehicle (1); and acquire the driving force based on the engine information.

4. The mass estimation device (2,200, 210, 220, 230) according to claim 3,
wherein the engine information includes information regarding an engine torque and a rotational frequency of the engine.

5. The mass estimation device (2,200, 210, 220, 230) according to claim 3 or 4,
wherein the data acquisition unit (21) is configured to: acquire, as the measurement data, tire rotational speed information indicating a rotational speed of at least one tire attached to the vehicle (1); and acquire the driving force based on the engine information and the tire rotational speed information.

6. The mass estimation device (2,200, 210, 220, 230) according to any one of claims 1 to 5,
wherein the data acquisition unit (21) is configured to: acquire, as the measurement data, tire rotational speed information indicating a rotational speed of at least one tire attached to the vehicle (1); and acquire the acceleration based on the tire rotational speed information.

7. The mass estimation device (2,200, 210, 220, 230) according to any one of claims 1 to 6,

wherein the data acquisition unit (21) is configured to acquire, as the measurement data, tire rotational speed information indicating a rotational speed of at least one front wheel tire attached to the vehicle (1), and a rotational speed of at least one rear wheel tire attached to the vehicle (1), and
the index dependent on the driving force is a slope of a regression line representing a relation between a slip ratio acquired from the tire rotational speed information, and the acceleration.

8. The mass estimation device (2,200, 210, 220, 230) according to any one of claims 1 to 6,

wherein the data acquisition unit (21) is configured to acquire, as the measurement data, tire rotational speed information indicating a rotational speed of at least one front wheel tire attached to the vehicle (1), and a rotational speed of at least one rear wheel tire attached to the vehicle (1), and

the index dependent on the driving force is a slope of a regression line representing a relation between a slip ratio acquired from the tire rotational speed information, and the driving force.

9. The mass estimation device (2,200, 210, 220, 230) according to any one of claims 1 to 6,

wherein the data acquisition unit (21) is configured to acquire, as the measurement data, data indicating positional information of the vehicle (1), and
the index dependent on the driving force is an acceleration calculated based on the data indicating the positional information.

10. The mass estimation device (2,200, 210, 220, 230) according to any one of claims 1 to 6,

wherein the data acquisition unit (21) is configured to acquire, as the measurement data, data indicating positional information of the vehicle (1), and tire rotational speed information indicating a rotational speed of at least one front wheel tire attached to the vehicle (1) and a rotational speed of at least one rear wheel tire attached to the vehicle (1), and
the index dependent on the driving force is a slope of a regression line representing a relation between an acceleration acquired based on the data indicating the positional information, and a slip ratio acquired from the tire rotational speed information.

11. The mass estimation device (2,200, 210, 220, 230) according to any one of claims 1 to 6,

the data acquisition unit (21) is configured to acquire, as the measurement data, data indicating positional information of the vehicle (1), and
the index dependent on the driving force is a slope of a regression line representing a relation between an acceleration acquired based on the data indicating the positional information, and the driving force.

12. A mass estimation method for estimating a mass of a vehicle (1), comprising the steps of:

sequentially acquiring a data set of an acceleration and a driving force of the vehicle (1), based on measurement data sequentially acquired while the vehicle (1) is traveling;
specifying, from the sequentially acquired data set, a slope of a regression line representing a relation between the acceleration and the driving force; and
estimating the mass of the vehicle (1) based on the slope,
**characterized in that** the step of estimating the mass is a step of: if an index dependent on the driving force does not vary beyond a first range from a first period through to a second period, and a variation from a first slope of the regression line that has been specified from a first data set acquired in the first period to a second slope of the regression line that has been specified from a second data set acquired in the second period exceeds a second range defined based on a variation of the index dependent on the driving force, rejecting the second slope; and otherwise estimating the mass of the vehicle (1) based on the second slope.

13. A mass estimation program for estimating a mass of a vehicle (1), the program causing a computer to execute the steps of:

sequentially acquiring a data set of an acceleration and a driving force of the vehicle (1), based on measurement data sequentially acquired while the vehicle (1) is traveling;
specifying, from the sequentially acquired data set, a slope of a regression line representing a relation between the acceleration and the driving force; and
estimating the mass of the vehicle (1) based on the slope,
**characterized in that** the step of estimating the mass is a step of: if an index dependent on the driving force does not vary beyond a first range from a first period through to a second period, and a variation from a first slope of the regression line that has been specified from a first data set acquired in the first period to a second slope of the regression line that has been specified from a second data set acquired in the second period exceeds a second range defined based on a variation of the index dependent on the driving force, rejecting the second slope; and otherwise estimating the mass of the vehicle (1) based on the second slope.

**Patentansprüche**

1. Ein Massenabschätzungsgerät (2, 200, 210, 220, 230), das eine Masse eines Fahrzeugs (1) abschätzt, mit:

   einer Datenerfassungseinheit (21), die dazu eingerichtet ist, um auf der Grundlage von während der Bewegung des Fahrzeugs (1) sequentiell erfassten Messdaten sequentiell einen Datensatz einer Beschleunigung und einer Antriebskraft des Fahrzeugs (1) zu erfassen; und
   einer Massenabschätzungseinheit (27), die dazu eingerichtet ist, um aus dem sequentiell erfassten Datensatz eine Steigung einer Regressionslinie zu spezifizieren, die einen Zusammenhang zwischen der Beschleunigung und der Antriebskraft darstellt, und um die Masse des Fahrzeugs (1) auf der Grundlage der Steigung abzuschätzen, wobei das Gerät **dadurch gekennzeichnet ist, dass**
   die Massenabschätzungseinheit (27) dazu eingerichtet ist, um, wenn ein von der Antriebskraft abhängiger Index von einer ersten Periode bis zu einer zweiten Periode nicht über einen ersten Bereich hinaus variiert, und eine Veränderung von einer ersten Steigung der aus einem in der ersten Periode erfassten ersten Datensatz spezifizierten Regressionslinie zu einer zweiten Steigung der aus einem in der zweiten Periode erfassten zweiten Datensatz spezifizierten Regressionslinie einen auf der Grundlage einer Veränderung des von der Antriebskraft abhängigen Indexes definierten zweiten Bereich übersteigt, die zweite Steigung abzulehnen, und andernfalls die Masse des Fahrzeugs (1) auf der Grundlage der zweiten Steigung abzuschätzen.

2. Das Massenabschätzungsgerät (2, 200, 210, 220, 230) nach Anspruch 1,
   wobei die Massenabschätzungseinheit (27) dazu eingerichtet ist, um, wenn die zweite Steigung abgelehnt ist, die Masse des Fahrzeugs (1) auf der Grundlage der ersten Steigung abzuschätzen.

3. Das Massenabschätzungsgerät (2, 200, 210, 220, 230) nach Anspruch 1 oder 2,
   wobei die Datenerfassungseinheit (21) dazu eingerichtet ist, um Motorinformationen, die einen Antriebszustand eines Motors des Fahrzeugs (1) angeben, als die Messdaten zu erfassen, und um die Antriebskraft auf der Grundlage der Motorinformationen zu erfassen.

4. Das Massenabschätzungsgerät (2, 200, 210, 220, 230) nach Anspruch 3,
   wobei die Motorinformationen Informationen bezüglich eines Motordrehmoments und einer Drehfrequenz des Motors aufweisen.

5. Das Massenabschätzungsgerät (2, 200, 210, 220, 230) nach Anspruch 3 oder 4,
   wobei die Datenerfassungseinheit (21) dazu eingerichtet ist, um Reifen-Drehgeschwindigkeitsinformationen, die eine Drehgeschwindigkeit von mindestens einem an dem Fahrzeug (1) angebrachten Reifen angeben, als die Messdaten zu erfassen, und um die Antriebskraft auf der Grundlage der Motorinformationen und der Reifen-Drehgeschwindigkeitsinformationen zu erfassen.

6. Das Massenabschätzungsgerät (2, 200, 210, 220, 230) nach einem der Ansprüche 1 bis 5,
   wobei die Datenerfassungseinheit (21) dazu eingerichtet ist, um Reifen-Drehgeschwindigkeitsinformationen, die eine Drehgeschwindigkeit von mindestens einem an dem Fahrzeug (1) angebrachten Reifen angeben, als die Messdaten zu erfassen, und um die Beschleunigung auf der Grundlage der Reifen-Drehgeschwindigkeitsinformationen zu erfassen.

7. Das Massenabschätzungsgerät (2, 200, 210, 220, 230) nach einem der Ansprüche 1 bis 6,

   wobei die Datenerfassungseinheit (21) dazu eingerichtet ist, um Reifen-Drehgeschwindigkeitsinformationen, die eine Drehgeschwindigkeit von mindestens einem an dem Fahrzeug (1) angebrachten Vorderrad-Reifen und eine Drehgeschwindigkeit von mindestens einem an dem Fahrzeug (1) angebrachten Hinterrad-Reifen angeben, als die Messdaten zu erfassen, und
   der von der Antriebskraft abhängige Index eine Steigung einer Regressionslinie ist, die einen Zusammenhang zwischen einem aus den Reifen-Drehgeschwindigkeitsinformationen erfassten Schlupfverhältnis und der Beschleunigung darstellt.

8. Das Massenabschätzungsgerät (2, 200, 210, 220, 230) nach einem der Ansprüche 1 bis 6,

   wobei die Datenerfassungseinheit (21) dazu eingerichtet ist, um Reifen-Drehgeschwindigkeitsinformationen, die eine Drehgeschwindigkeit von mindestens einem an dem Fahrzeug (1) angebrachten Vorderrad-Reifen und eine Drehgeschwindigkeit von mindestens einem an dem Fahrzeug (1) angebrachten Hinterrad-Reifen angeben, als die Messdaten zu erfassen, und

der von der Antriebskraft abhängige Index eine Steigung einer Regressionslinie ist, die einen Zusammenhang zwischen einem aus den Reifen-Drehgeschwindigkeitsinformationen erfassten Schlupfverhältnis und der Antriebskraft darstellt.

9. Das Massenabschätzungsgerät (2, 200, 210, 220, 230) nach einem der Ansprüche 1 bis 6,

wobei die Datenerfassungseinheit (21) dazu eingerichtet ist, um Positionsinformationen des Fahrzeugs (1) angebende Daten als die Messdaten zu erfassen, und

der von der Antriebskraft abhängige Index eine auf der Grundlage der die Positionsinformationen angebenden Daten berechnete Beschleunigung ist.

10. Das Massenabschätzungsgerät (2, 200, 210, 220, 230) nach einem der Ansprüche 1 bis 6,

wobei die Datenerfassungseinheit (21) dazu eingerichtet ist, um Positionsinformationen des Fahrzeugs (1) angebende Daten und Reifen-Drehgeschwindigkeitsinformationen, die eine Drehgeschwindigkeit von mindestens einem an dem Fahrzeug (1) angebrachten Vorderrad-Reifen und eine Drehgeschwindigkeit von mindestens einem an dem Fahrzeug (1) angebrachten Hinterrad-Reifen angeben, als die Messdaten zu erfassen, und

der von der Antriebskraft abhängige Index eine Steigung einer Regressionslinie ist, die einen Zusammenhang zwischen einer auf der Grundlage der die Positionsinformationen angebenden Daten erfassten Beschleunigung und einem aus den Reifen-Drehgeschwindigkeitsinformationen erfassten Schlupfverhältnis darstellt.

11. Das Massenabschätzungsgerät (2, 200, 210, 220, 230) nach einem der Ansprüche 1 bis 6,

wobei die Datenerfassungseinheit (21) dazu eingerichtet ist, um Positionsinformationen des Fahrzeugs (1) angebende Daten als die Messdaten zu erfassen, und

der von der Antriebskraft abhängige Index eine Steigung einer Regressionslinie ist, die einen Zusammenhang zwischen einer auf der Grundlage der die Positionsinformationen angebenden Daten erfassten Beschleunigung und der Antriebskraft darstellt.

12. Ein Massenabschätzungsverfahren zum Abschätzen einer Masse eines Fahrzeugs (1), mit den Schritten:

sequenziell erfassen eines Datensatzes einer Beschleunigung und einer Antriebskraft des Fahrzeugs (1) auf der Grundlage von während der Bewegung des Fahrzeugs (1) sequentiell erfassten Messdaten; und

spezifizieren einer Steigung einer Regressionslinie, die einen Zusammenhang zwischen der Beschleunigung und der Antriebskraft darstellt, aus dem sequentiell erfassten Datensatz; und

abschätzen der Masse des Fahrzeugs (1) auf der Grundlage der Steigung, wobei das Verfahren **dadurch gekennzeichnet ist, dass**

der Schritt zum Abschätzen der Masse ein Schritt aus folgendem ist:

wenn ein von der Antriebskraft abhängiger Index von einer ersten Periode bis zu einer zweiten Periode nicht über einen ersten Bereich hinaus abweicht und eine Veränderung von einer ersten Steigung der aus einem in der ersten Periode erfassten ersten Datensatz spezifizierten Regressionslinie zu einer zweiten Steigung der aus einem in der zweiten Periode erfassten zweiten Datensatz spezifizierten Regressionslinie einen auf der Grundlage einer Variation des von der Antriebskraft abhängigen Indexes definierten zweiten Bereich übersteigt, die zweite Steigung abgelehnt wird, und andernfalls die Masse des Fahrzeugs (1) auf der Grundlage der zweiten Steigung abgeschätzt wird.

13. Ein Massenabschätzungsprogramm zum Abschätzen einer Masse eines Fahrzeugs (1), das einen Computer dazu veranlasst, folgende Schritte auszuführen:

sequenziell erfassen eines Datensatzes einer Beschleunigung und einer Antriebskraft des Fahrzeugs (1) auf der Grundlage von während der Bewegung des Fahrzeugs (1) sequentiell erfassten Messdaten; und

spezifizieren einer Steigung einer Regressionslinie, die einen Zusammenhang zwischen der Beschleunigung und der Antriebskraft darstellt, aus dem sequentiell erfassten Datensatz; und

abschätzen der Masse des Fahrzeugs (1) auf der Grundlage der Steigung, wobei das Programm **dadurch gekennzeichnet ist, dass**

der Schritt zum Abschätzen der Masse ein Schritt aus folgendem ist:

wenn ein von der Antriebskraft abhängiger Index von einer ersten Periode bis zu einer zweiten Periode nicht über einen ersten Bereich hinaus abweicht und eine Veränderung von einer ersten Steigung der aus einem in der ersten Periode erfassten ersten Datensatz spezifizierten Regressionslinie zu einer zweiten Steigung der aus einem in der zweiten Periode erfassten zweiten Datensatz spezifizierten Regressionslinie einen auf der Grundlage einer Variation des von der Antriebskraft abhängigen Indexes definierten zweiten Bereich übersteigt, die zweite Steigung abgelehnt wird, und andernfalls die Masse des Fahrzeugs (1) auf der Grundlage der zweiten Steigung abgeschätzt wird.

**Revendications**

1. Dispositif d'estimation de masse (2, 200, 210, 220, 230) qui estime une masse d'un véhicule (1), comprenant :

   une unité d'acquisition de données (21) configurée pour acquérir séquentiellement un jeu de données d'une accélération et d'une force d'entraînement du véhicule (1), sur la base de données de mesure acquises séquentiellement pendant que le véhicule (1) se déplace ; et
   une unité d'estimation de masse (27) configurée pour : spécifier, à partir du jeu de données acquises séquentiellement, une pente d'une ligne de régression représentant une relation entre l'accélération et la force d'entraînement ; et estimer la masse du véhicule (1) sur la base de la pente,
   **caractérisé en ce que**
   l'unité d'estimation de masse (27) est configurée pour : si un indice dépendant de la force d'entraînement ne varie pas d'une première période à une deuxième période au-delà d'une première plage, et qu'une variation d'une première pente de la ligne de régression, qui a été spécifiée à partir d'un premier jeu de données acquis dans la première période, à une deuxième pente de la ligne de régression, qui a été spécifiée à partir d'un deuxième jeu de données acquis dans la deuxième période, dépasse une deuxième plage définie sur la base d'une variation de l'indice dépendant de la force d'entraînement, rejeter la deuxième pente ; et sinon estimer la masse du véhicule (1) sur la base de la deuxième pente.

2. Dispositif d'estimation de masse (2, 200, 210, 220, 230) selon la revendication 1, dans lequel l'unité d'estimation de masse (27) est configurée pour estimer la masse du véhicule (1) sur la base de la première pente si la deuxième pente est rejetée.

3. Dispositif d'estimation de masse (2, 200, 210, 220, 230) selon la revendication 1 ou 2, dans lequel l'unité d'acquisition de données (21) est configurée pour : acquérir, comme données de mesure, des informations de moteur indiquant un état d'entraînement d'un moteur du véhicule (1) ; et acquérir la force d'entraînement sur la base des informations de moteur.

4. Dispositif d'estimation de masse (2, 200, 210, 220, 230) selon la revendication 3, dans lequel les informations de moteur comportent des informations concernant un couple de moteur et une fréquence de rotation du moteur.

5. Dispositif d'estimation de masse (2, 200, 210, 220, 230) selon la revendication 3 ou 4, dans lequel l'unité d'acquisition de données (21) est configurée pour : acquérir, comme données de mesure, des informations de vitesse de rotation de pneu indiquant une vitesse de rotation d'au moins un pneu fixé au véhicule (1) ; et acquérir la force d'entraînement sur la base des informations de moteur et des informations de vitesse de rotation de pneu.

6. Dispositif d'estimation de masse (2, 200, 210, 220, 230) selon l'une quelconque des revendications 1 à 5, dans lequel l'unité d'acquisition de données (21) est configurée pour : acquérir, comme données de mesure, des informations de vitesse de rotation de pneu indiquant une vitesse de rotation d'au moins un pneu fixé au véhicule (1) ; et acquérir l'accélération sur la base des informations de vitesse de rotation de pneu.

7. Dispositif d'estimation de masse (2, 200, 210, 220, 230) selon l'une quelconque des revendications 1 à 6,

   dans lequel l'unité d'acquisition de données (21) est configurée pour : acquérir, comme données de mesure, des informations de vitesse de rotation de pneu indiquant une vitesse de rotation d'au moins un pneu de roue avant fixé au véhicule (1), et une vitesse de rotation d'au moins un pneu de roue arrière fixé au véhicule (1), et l'indice dépendant de la force d'entraînement est une pente d'une ligne de régression représentant une relation entre un rapport de glissement acquis à partir des informations de vitesse de rotation de pneu, et l'accélération.

8. Dispositif d'estimation de masse (2, 200, 210, 220, 230) selon l'une quelconque des revendications 1 à 6,

dans lequel l'unité d'acquisition de données (21) est configurée pour acquérir, comme données de mesure, des informations de vitesse de rotation de pneu indiquant une vitesse de rotation d'au moins un pneu de roue avant fixé au véhicule (1), et une vitesse de rotation d'au moins un pneu de roue arrière fixé au véhicule (1), et l'indice dépendant de la force d'entraînement est une pente d'une ligne de régression représentant une relation entre un rapport de glissement acquis à partir des informations de vitesse de rotation de pneu, et la force d'entraînement.

9. Dispositif d'estimation de masse (2, 200, 210, 220, 230) selon l'une quelconque des revendications 1 à 6,

dans lequel l'unité d'acquisition de données (21) est configurée pour acquérir, comme données de mesure, des données indiquant des informations de position du véhicule (1), et l'indice dépendant de la force d'entraînement est une accélération calculée sur la base des données indiquant les informations de position.

10. Dispositif d'estimation de masse (2, 200, 210, 220, 230) selon l'une quelconque des revendications 1 à 6,

dans lequel l'unité d'acquisition de données (21) est configurée pour acquérir, comme données de mesure, des données indiquant des informations de position du véhicule (1), et des informations de vitesse de rotation de pneu indiquant une vitesse de rotation d'au moins un pneu de roue avant fixé au véhicule (1) et une vitesse de rotation d'au moins un pneu de roue arrière fixé au véhicule (1), et l'indice dépendant de la force d'entraînement est une pente d'une ligne de régression représentant une relation entre une accélération acquise sur la base des données indiquant les informations de position, et un rapport de glissement acquis à partir des informations de vitesse de rotation de pneu.

11. Dispositif d'estimation de masse (2, 200, 210, 220, 230) selon l'une quelconque des revendications 1 à 6,

l'unité d'acquisition de données (21) est configurée pour acquérir, comme données de mesure, des données indiquant des informations de position du véhicule (1), et l'indice dépendant de la force d'entraînement est une pente d'une ligne de régression représentant une relation entre une accélération acquise sur la base des données indiquant les informations de position, et la force d'entraînement.

12. Procédé d'estimation de masse pour estimer une masse d'un véhicule (1), comprenant les étapes consistant à :

acquérir séquentiellement un jeu de données d'une accélération et d'une force d'entraînement du véhicule (1), sur la base de données de mesure acquises séquentiellement pendant que le véhicule (1) se déplace ;
spécifier, à partir du jeu de données acquises séquentiellement, une pente d'une ligne de régression représentant une relation entre l'accélération et la force d'entraînement ; et
estimer la masse du véhicule (1) sur la base de la pente,
**caractérisé en ce que**
l'étape consistant à estimer la masse est une étape consistant à : si un indice dépendant de la force d'entraînement ne varie pas d'une première période à une deuxième période au-delà d'une première plage, et qu'une variation d'une première pente de la ligne de régression, qui a été spécifiée à partir d'un premier jeu de données acquis dans la première période, à une deuxième pente de la ligne de régression, qui a été spécifiée à partir d'un deuxième jeu de données acquis dans la deuxième période, dépasse une deuxième plage définie sur la base d'une variation de l'indice dépendant de la force d'entraînement, rejeter la deuxième pente ; et sinon estimer la masse du véhicule (1) sur la base de la deuxième pente.

13. Programme d'estimation de masse pour estimer une masse d'un véhicule (1), le programme amenant un ordinateur à exécuter les étapes consistant à :

acquérir séquentiellement un jeu de données d'une accélération et d'une force d'entraînement du véhicule (1), sur la base de données de mesure acquises séquentiellement pendant que le véhicule (1) se déplace ;
spécifier, à partir du jeu de données acquises séquentiellement, une pente d'une ligne de régression représentant une relation entre l'accélération et la force d'entraînement ; et
estimer la masse du véhicule (1) sur la base de la pente,
**caractérisé en ce que**
l'étape consistant à estimer la masse est une étape consistant à : si un indice dépendant de la force d'entraînement ne varie pas d'une première période à une deuxième période au-delà d'une première plage, et qu'une variation d'une première pente de la ligne de régression, qui a été spécifiée à partir d'un premier jeu de données acquis dans la première période, à une deuxième pente de la ligne de régression, qui a été spécifiée à partir d'un deuxième jeu de données acquis dans la deuxième période, dépasse une deuxième plage définie sur la base d'une variation de l'indice dépendant de la force d'entraînement, rejeter la deuxième pente ; et sinon estimer la masse du véhicule (1) sur la base de la deuxième pente.

Fig.1

MASS ESTIMATION
DEVICE

2 (200,210,220,230)

1

FL    FR

6    6

5

RL    RR

6    6

Fig. 2

2 (200,210,220,230)

## MASS ESTIMATION DEVICE (CONTROL UNIT)

11

### PROCESSOR

21

#### DATA ACQUISITION UNIT

22
ROTATION SPEED
ACQUISITION UNIT

23
VEHICLE SPEED
ACQUISITION UNIT

24
ACCELERATION
ACQUISITION UNIT

25
DRIVING FORCE
ACQUISITION UNIT

26
INDEXING DATA
ACQUISITION UNIT

27
MASS ESTIMATION
UNIT

12
INTERFACE

14
MAIN
MEMORY

13
STORAGE

10
PROGRAM

3

6
6
6
6

9

Fig. 3

Fig. 4

m2

M 1

m1

Fig. 5

Fig.6

ACCELERATION α [m/s²]

DRIVING FORCE F[N]

Fig. 7

Fig. 8

SLIP RATIO λ [%]

ACCELERATION α [m/s²]

Fig. 9

START

CALCULATE ROTATIONAL SPEEDS v1 TO v4 OF TIRES — S1

CALCULATE AND STORE VEHICLE SPEED V — S2

CALCULATE AND STORE ACCELERATION $\alpha$ OF VEHICLE — S3

CALCULATE AND STORE DRIVING FORCE F — S4

CALCULATE AND STORE SLIP RATIO $\lambda$ — S5

IS DATA VALID? — S6

DELETE DATA — S15

NO

YES

NUMBER OF DATA ITEMS $\geq$ K? — S7

NO

YES

CALCULATE SLOPE M1 AND SLOPE O — S8

$m1 \leqq M1 \leqq m2$? — S9

NO

CALCULATE PRELIMINARY ESTIMATE VALUE Mt — S10

CALCULATE RATES OF CHANGE $\Delta M1$ AND $\Delta O$ — S11

$|\Delta O| \leq Th1$, AND $|\Delta M1 - \Delta O| > Th2$? — S12

NO

YES

ADOPT PRELIMINARY ESTIMATION — S14

CANCEL PRELIMINARY ESTIMATION — S13

Fig.10

Fig.11

2 (200,210,220,230)

MASS ESTIMATION DEVICE (CONTROL UNIT)

11

PROCESSOR 21

DATA ACQUISITION UNIT

ROTATION SPEED ACQUISITION UNIT 22

VEHICLE SPEED ACQUISITION UNIT 23

ACCELERATION ACQUISITION UNIT 24

DRIVING FORCE ACQUISITION UNIT 25

INDEXING DATA ACQUISITION UNIT 26

MASS ESTIMATION UNIT 27

DEFLATION DETECTION UNIT 28

DEFLATION ALARM UNIT 29

12

INTERFACE

14

MAIN MEMORY

13

STORAGE

10

PROGRAM

3

6
6
6
6

9

Fig.12

```
                    ┌─────────────┐
                    │    START    │
                    └──────┬──────┘
                           │
                           ▼
           ┌───────────────────────────────┐      S21
           │  CALCULATE DEFLATION INDEX     │
           │  VALUES DEL1, DEL2, AND DEL3   │
           └───────────────┬───────────────┘
                           │
                           ▼
              ┌─────────────────────────┐         S22
              │      PERFORM LOAD        │
              │   CORRECTION FOR DEL2    │
              └────────────┬────────────┘
                           │
                           ▼                        S23
              ╱─────────────────────────╲
            ╱   DEFLATION RATE OF EACH    ╲          NO
           ╱    WHEEL EXCEEDS ALARM        ╲─────────►
           ╲    THRESHOLD VALUE?           ╱
            ╲─────────────────────────────╱
                           │ YES
                           ▼                        S24
              ┌─────────────────────────┐
              │      OUTPUT ALARM        │
              └────────────┬────────────┘
                           │
                           ▼
                    ┌─────────────┐
                    │     END     │
                    └─────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5214738 B
- JP 2019184412 B
- JP 2012202836 A